# EUROPEAN PATENT APPLICATION

(11) **EP 1 761 097 A2**
(43) Date of publication of application: **07.03.2007**
(21) Application number: 06018022.1
(22) Date of filing: 29.08.2006
(51) Int. Cl.: H04Q 7/38

(54) **Method and apparatus for transmitting/receiving channel quality information (CQI) in a wireless communication system**

(30) Priority: 29.08.2005 KR 20050079687
(71) Applicant: Samsung Electronics Co., Ltd., Yeongtong-gu Suwon-si, Gyeonggi-do (KR)
(72) Inventor: Jeong, Kyeong-In, Suwon-si Gyeonggi-do (KR); Kwon, Hwan-Joon, Unknown (KR); Choi, Sung-Ho, Suwon-si Gyeonggi-do (KR); Song, O-Sok, Unknown (KR)
(74) Representative: Grünecker, Kinkeldey, Stockmair & Schwanhäusser Anwaltssozietät

(57) **Abstract**

A method and an apparatus for adaptively transmitting and receiving channel quality information of each AMC sub-band in application of an AMC technology in a broadband OFDM-based system are provided. A speed status of the UE is determined, a determination is made based on a determined speed status whether to receive the channel quality information of the UE, a channel quality information transmission mode is reported to indicate a type of the channel quality information, to the UE when it is determined to receive the channel quality information of the UE. The channel quality information is received from the UE according to the channel quality information transmission mode and radio resources are allocated to the UE in consideration of the received channel quality information.

## Description

### BACKGROUND OF THE INVENTION

### Field of the Invention:

The present invention relates to a wireless communication system. More particularly, the present invention relates to a method and an apparatus for providing channel quality information in a wireless communication system.

### Description of the Related Art:

Current communication systems can be largely divided into wire communication systems and wireless communication systems. The wireless communication systems can be divided according to their multiplexing schemes, for example, a Time Division Multiplexing (TDM) scheme, a Code Division Multiplexing (CDM) scheme, and an Orthogonal Frequency Division Multiplexing (OFDM) scheme. With the current remarkable and rapid development of technologies, the CDM scheme is now most widely used. The CDM scheme can be divided into a synchronous scheme and an asynchronous scheme and is being developed into various schemes capable of providing relatively high-speed data communication.

However, since the CDM scheme uses orthogonal codes in order to identify channels, the CDM scheme has now caused shortages in resources due to the limited quantity of orthogonal codes. Therefore, as a replacement for the CDM scheme, the OFDM scheme is now strongly gathering attention. The OFDM scheme, which transmits data using multiple carriers, is a special type of a Multiple Carrier Modulation (MCM) scheme in which an input serial symbol sequence is converted into parallel symbol sequences, and the parallel symbol sequences are modulated with a plurality of mutually orthogonal sub-carriers. The parallel symbol sequences are modulated into a plurality of sub-carrier channels, which are then transmitted.

This type of MCM system was first applied to a high-frequency wireless communication for use in the High Frequency (HF) radio in the late 1950's, and an OFDM scheme for overlapping between a plurality of orthogonal sub-carriers was first studied in the 1970's. This OFDM scheme implements an orthogonal modulation between multiple carriers, resulting in limited system application. However, in 1971, Weinstein et al. announced that efficient modulation and demodulation can be achieved by using the Discrete Fourier Transform (DCT). Since this announcement, the technology for the OFDM scheme has rapidly developed. Known use of a guard interval and insertion of a cyclic prefix in the art has made it possible to further decrease the negative influence of the OFDM system in relation to the multi-path and delay spread. As a result of such technological development, the OFDM scheme is now widely applied to digital transmission technologies, which include Digital Audio Broadcasting (DAB) and digital television, Wireless Local Area Network (WLAN), and a Wireless Asynchronous Transmission mode (WATM), among others.

More specifically, after introduction of use of the DFT, the OFDM has not been widely used due to the complexity in the hardware. However, recent developments in various digital signal processing technologies including Fast Fourier Transform (FFT) and Inverse Fast Fourier Transform (IFFT) have realized actual use of the OFDM.

The OFDM scheme is similar to the conventional Frequency Division Multiplexing (FDM). However, the OFDM scheme can achieve optimum transmission efficiency during high-speed data transmission by maintaining the orthogonality between multiple sub-carriers in the transmission. Further, the OFDM scheme has superior frequency-use efficiency and is very resistive to a multi-path fading, which results in an optimum transmission efficiency during high-speed data transmission. Since the OFDM scheme uses an overlapped frequency spectrum, it can effectively use a frequency, is very resistive to a frequency selective fading and a multi-path fading, reduces an Inter-Symbol Interference (ISI) using a guard interval, and provides an equalizer composed of simple hardware. Also, the OFDM scheme is very resistive to an impulse noise, such that it is widely used in communication system architecture.

Meanwhile, factors degrading a high speed and high quality data service in wireless communication are usually caused by the channel environment. In the wireless communication, the channel environment is frequently changed by power change of received signals due to fading and the Additive White Gaussian Noise (AWGN), shadowing, Doppler Effect due to movement or frequency speed change of a User Equipment (UE), interference by other users or multi-path signals, among others. Therefore, in order to support a high speed and high quality data service in wireless communication, it is necessary to efficiently overcome such degrading factors. One of the important methods used in order to overcome fading in a wireless communication system is an Adaptive Modulation and Coding (AMC) scheme, which will be discussed below.

The AMC scheme is a scheme for adaptively adjusting the modulation scheme and the coding scheme according to channel change in the wireless link. The Channel Quality Information (CQI) of the wireless link is usually detected by measuring a Signal to Noise Ratio (SNR) of a received signal. For example, in a downlink, a UE measures CQI of the downlink and feeds the measured CQI back to a node B through an uplink. The node B estimates the channel status of the downlink based on the CQI of the downlink that is fed back and adjusts the modulation scheme and the coding scheme in accordance with the estimated channel status. According to the AMC scheme, a high order modulation scheme and a high coding rate are applied when there is relatively good channel status. A low order modulation scheme and a low coding rate are applied when there is relatively bad channel status. In comparison with the existing scheme depending on high-speed power control, the AMC scheme can enhance the adaptability to temporally variable characteristics of the channel, thereby improving the average performance of the system.

In general, broadband systems simultaneously operate a plurality of AMC channels, instead of operating a single AMC channel. Specifically, a broadband system divides the entire frequency band into a plurality of sub-bands, receives individual CQI for each sub-band fed back from a UE, and independently applies the AMC scheme to each sub-band. This occurs since the broadband system has higher frequency selectivity than a narrowband system. Hereinafter, application of the AMC technology to a broadband OFDM system will be described.

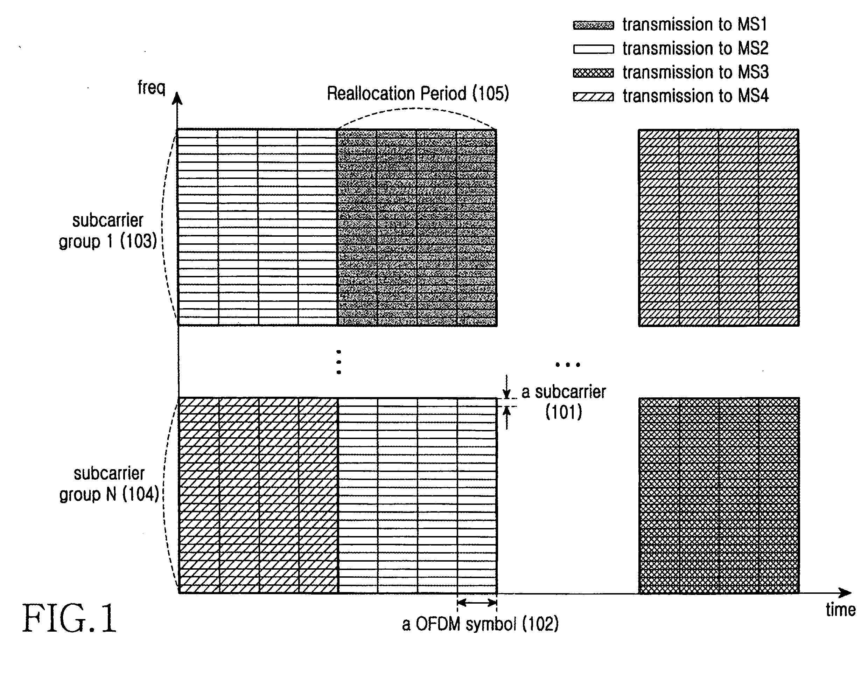

FIG. 1 is a graph illustrating an example of a typical broadband OFDM system which uses the AMC technology. The graph shown in FIG. 1 has an ordinate axis according to orthogonal frequencies and an abscissa axis according to time.

In FIG. 1, reference numeral 101 denotes one sub-carrier and reference numeral 102 denotes one OFDM symbol. In an OFDM system as shown in FIG. 1, the entire frequency band is divided into N sub-carrier groups, that is, N sub-bands, and AMC operation is performed for each sub-carrier group. Hereinafter, one sub-carrier group is called one "AMC sub-band." Specifically, sub-carrier group #1 103 is referred to as AMC sub-band #1, and sub-carrier group #N 104 is referred to as AMC sub-band #N.

In a typical OFDM system, allocation of resources (such as scheduling) is performed with a reallocation period including a plurality of OFDM symbols as noted by reference numeral 105.

As described above, the AMC operation (modulation and coding) is independently performed for each AMC scheduling in the OFDM system. Therefore, each UE feeds back CQI information for each scheduling, and a node B receives the CQI information for each scheduling, performs scheduling for each sub-band, and transmits user data for each sub-band. As an example of the scheduling, the node B selects a UE comprising the best channel quality for each sub-band and transmits data to the selected UE, thereby maximizing the system capacity.

According to the characteristics of the AMC operation, it is better for the multiple sub-carriers which are necessary for transmission of data to one UE to be closer. This is because adjacent sub-carriers have similar channel response characteristics while distanced sub-carriers may have largely different channel response characteristics when there is frequency selectivity due to multi-path wireless channels in a frequency domain. Further, the object of the AMC operation is to maximize the system capacity by collecting adjacent sub-carriers comprising good channel responses and transmitting data through the collected adjacent sub-carriers. Therefore, it is preferable to have a structure that can collect adjacent sub-carriers with good channel responses and transmit data through the collected adjacent sub-carriers.

Therefore, the AMC technology as described above is proper for data transmission to a specific user. This is because it is preferred that a channel transmitted to a plurality of users, such as a broadcast channel or a common control channel, not be adapted to the channel status of only one user. Further, the AMC is proper for transmission of traffic that is less sensitive to delay, because the AMC technology is basically intended for data transmission to UEs in good channel conditions, and it is impossible to wait until the channel condition of a corresponding user becomes good enough to transmit delay-sensitive traffic, such as real-time traffic including Voice over IP (VoIP) traffic and video conference traffic. In other words, it may be necessary to transmit data in a bad channel condition, in order to guarantee a limit in delay for the users of real-time traffic.

Accordingly, there is a need for an improved system and method for adaptively transmitting and receiving channel quality information of each AMC sub-band in application of an AMC technology in a broadband OFDM-based system.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method and an apparatus for adaptively transmitting and receiving channel quality information of each AMC sub-band in application of an AMC technology in a broadband OFDM-based system.

An exemplary embodiment of the present invention provides a method and an apparatus in which a UE either transmits or does not transmit channel quality information according to channel conditions, thereby reducing the overhead due to the transmission of the channel quality information.

It is still another object of an exemplary embodiment of the present invention to provide a method and an apparatus, which define a speed status of a UE as one of multiple levels and measures and reports channel quality information of the UE according to each level.

It is still another object of an exemplary embodiment of the present invention to provide a method and an apparatus, in which information about a channel quality information transmission mode of a UE is transmitted to a node B controlling the target cell during handover of the UE, thereby continuously supporting an adaptive transmission of the channel quality information.

According to an exemplary embodiment of the present invention, a method and an apparatus are provided to provide efficient and exact channel quality information by applying an AMC technology in a broadband OFDM system.

It is still another object of an exemplary embodiment of the present invention to provide a method and an apparatus, which can improve the system capability by providing exact and efficient channel quality information of each AMC sub-band according to the AMC technology in a broadband OFDM system.

In order to accomplish this object, a method for receiving channel quality information of a User Equipment (UE) in a wireless communication system which divides an entire frequency band into multiple sub-bands and uses each of the multiple sub-bands in communication is provided. A speed status of the UE is determined. The determination is made based on a determined speed status as to whether to receive the channel quality information of the UE. A channel quality information transmission mode is reported which indicates a type of the channel quality information, to the UE when a determination is made to receive the channel quality information of the UE. The channel quality information is received from the UE according to the channel quality information transmission mode. Radio resources are allocated to the UE in consideration of the received channel quality information.

In accordance with another aspect of an exemplary embodiment of the present invention, a method for transmitting channel quality information of a UE in a wireless communication system which divides an entire frequency band into multiple sub-bands and uses each of the multiple sub-bands in communication is provided. A speed status of the UE is determined and the determined speed status is reported to a node B when the determined speed status is different from a previous speed status. Information from the node B is received, which indicates a channel quality information transmission mode according to the determined speed state. At least one of an average channel quality value of the sub-bands and channel quality information of each of the sub-bands is transmitted to the node B.

In accordance with another aspect of an exemplary embodiment of the present invention, an apparatus for transmitting and receiving channel quality information of a User Equipment (UE) in a wireless communication system which divides an entire frequency band into multiple sub-bands and uses each of the multiple sub-bands in communication is provided. The UE determines a speed status of the UE and transmits the determined speed status to a node B when the determined speed status is different from a previous speed status. The node B determines whether to receive the channel quality information of the UE based on the determined speed status. The node B reports a channel quality information transmission mode, which indicates a type of the channel quality information, to the UE when a determination to receive the channel quality information of the UE is made. The node B also receives the channel quality information from the UE according to the channel quality information transmission mode, wherein the received channel quality information is used in order to allocate radio resources to the UE.

Other objects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other exemplary objects, features and advantages of certain exemplary embodiments of the present invention will be more apparent from the following description taken in conjunction with the accompanying drawings, in which:
FIG. 1 is a graph illustrating an example of a typical broadband OFDM system which uses the AMC technology;
FIG. 2 is a block diagram of a node B for determining a channel quality information transmission mode for the AMC operation according to an exemplary embodiment of the present invention;
FIG. 3 is a block diagram of a UE for transmitting channel quality information according to an exemplary embodiment of the present invention;
FIG. 4 is a flowchart of a process for determining a channel quality information transmission mode in a wireless communication system according to an exemplary embodiment of the present invention;
FIG. 5 is a message flowchart illustrating a change in the transmission mode by a request from a UE according to an exemplary embodiment of the present invention;
FIG. 6 is a message flowchart illustrating a change in the transmission mode by a command of the node B according to an exemplary embodiment of the present invention;
FIG. 7 illustrates channel quality information transmission modes which can be determined based on a speed status of the UE according to an exemplary embodiment of the present invention;
FIG. 8 is a message flowchart which illustrates a process for transmitting channel quality information for a speed status of the UE according to a first exemplary embodiment of the present invention;
FIGs. 9A and 9B illustrate a message flowchart of a process for transmission of channel quality information according to the second exemplary embodiment of the present invention;
FIG. 10 is a flowchart illustrating an operation of a node B for determining a channel quality information transmission mode according to an exemplary embodiment of the present invention;
FIGs. 11A and 11B illustrate a flowchart of an operation of a UE for determining the speed status of the UE according to the first exemplary embodiment of the present invention;
FIGs. 12A and 12B illustrate a flowchart of an operation of a UE for determining the speed status of the UE according to the second exemplary embodiment of the present invention; and
FIGs. 13A and 13B illustrate a flowchart of an operation of a UE for determining the speed status of the UE according to the third exemplary embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

First, several points to be considered for an OFDM system according to an exemplary embodiment of the present invention will be discussed. The following points must be taken into important consideration in design and operation of an OFDM system operating with a plurality of sub-bands.

It is necessary to determine the number of sub-bands into which the entire system band will be divided. That is, it is necessary to determine the number N, which is the number of divided sub-bands. Second, it is necessary to determine whether to feedback the channel quality information for all of the N sub-bands to each UE, or to feedback the channel quality information for only a part of the N sub-bands to each UE, or to feedback only an average value for all or only a part of the N sub-bands to each UE.

The number of sub-bands into which the entire system band will be divided is important in order to use the frequency selectivity of a channel as much as possible. Specifically, this is because it is most efficient to select sub-carriers with good channel conditions and transit data by using the selected sub-carriers. In order to achieve such selection and transmission, it is best to make the value N as large as possible. In an extreme case, it is beneficial to make N as large as the number of entire sub-carriers. However, when N is too large, the UE may have too much channel quality information to feedback, which results in an uplink load that is too large.

If four bits are necessary for transmission of channel quality information for one sub-band by a UE, 40 bits are required in order to transmit channel quality information for ten sub-bands. Such an overhead may be considerably large, in view of the fact that the transmission period of the channel quality information is very short in order to catch up with the fast fading.

When the entire system band is divided into a small number N of sub-bands, it may be impossible to properly utilize the frequency selectivity of the channels, so that the gain obtainable from the AMC operation is reduced. The problem of how many sub-bands into which the entire system band will be divided establishes a trade-off relation between the downlink performance and the downlink load. Therefore, the value N must be determined without any bias between the two incompatible objects, the downlink performance improvement and the downlink load reduction.

Second, it is necessary to determine whether to feed the channel quality information back for all of the N sub-bands to each UE, or to feed the channel quality information back for only a part of the N sub-bands to each UE, or to feed only an average value back for all or only a part of the N sub-bands to each UE. This issue relates to how to feed the channel quality information back to each UE when the entire system band has been divided into N sub-bands. For example, when the entire system band has been divided into four sub-bands, the UE can feed the channel quality information back according to the following methods.

According to the first method, the UE always feeds corresponding channel quality information of all the four sub-bands back, respectively. According to the second method, the UE selects an instantly best sub-band from the four sub-bands and feeds back only the channel quality information of the selected sub-band together with an identifier of the selected sub-band. According to the third method, the UE selects k number of instantly best sub-bands from the four sub-bands (k cannot exceed four) and feeds only the channel quality information of the k selected sub-bands back together with identifiers of the k selected sub-bands. According to the fourth method, the UE always feeds back average channel quality information for the four sub-bands. According to the fifth method, the UE selects k number of sub-bands from the four sub-bands (k cannot exceed four) and feeds back average channel quality information for the k selected sub-bands.

Further to the five above-mentioned methods, there may be various additional methods for feeding back the channel quality information for the four sub-bands. Hereinafter, each of the above-mentioned methods will be referred to as a "channel quality information transmission mode." The channel quality information transmission mode may include a case of transmitting no channel quality information as an enlarged concept. Various channel quality information transmission modes, which will be described below, also have two incompatible aspects, the downlink performance improvement and the downlink load reduction.

From among the above methods, when the UE always feeds back the corresponding channel quality information of all four sub-bands, the uplink load may increase, while the node B can recognize the channel quality information of all four sub-bands, for all UEs. In contrast, when the UE feeds back channel quality information of only selected sub-bands, the uplink load decreases. However, the node B can recognize the channel quality information of only the selected sub-bands and cannot recognize the channel quality information of the other sub-bands. It is necessary to take this problem into consideration in order to more efficiently transmit channel quality information in an OFDM system.

According to an exemplary embodiment of the present invention, an optimum mode is selected from various modes as illustrated in Table 1 below.

**Table 1**

| Environment | | Channel quality information transmission mode ■ ■ ■ ■ ■ ■ ■ ■ |
|---|---|---|
| Downlink load | High | 1 out of N, 2 out of N |
| | Low | N- 1 out of N, N out of N |
| Uplink | High | 1 out of N. 2 out of N. Average |
| | Low | N-1 out of N, N out of N |
| Speed | High | Average value |
| | Low | Selection according to other |
| Service type (service | | |
| | Sensitive | N-1 out of N, N out of N |
| | Sensitive | 1 out of N, 2 out of N |
| | Generous | N-1 out of N, N out of N |
| | Generous | 1 out of N, 2 out of N |

Table 1 illustrates situations in which environmental conditions can determine the most advantageous channel quality information transmission mode. In Table 1, "k out of N" implies that the UE selects k sub-bands comprising good channel conditions from N sub-bands and feeds back channel quality information of the k selected sub-bands. In Table 1, k denotes an integer which is larger than or equal to 1 and smaller than or equal to N. Further, in Table 1, "average value" implies transmission of average channel quality information of all the sub-bands or a part of all the sub-bands, instead of individual feedback of the channel quality information of each sub-band.

Hereinafter, the most advantageous channel quality information transmission modes according to various environmental conditions will be described with reference to FIG. 1.

When the downlink load is low, there are not many users requiring the service within the system and it is highly probable that multiple sub-bands will be allocated to one user. Therefore, it is preferable to require channel quality information of all the sub-bands from each UE. In contrast, when the downlink load is high, there are many users requiring the service within the system and it is less probable that multiple sub-bands will be allocated to one user. Therefore, a transmission mode, in which each UE feeds back channel quality information of a part of all the sub-bands, is selected. That is, the UE selects only a part of the total N sub-bands and feeds back the channel quality information of only the selected sub-bands, thereby reducing the uplink load.

Further, when the uplink load is low, feedback of a large quantity of channel quality information by the UE does not create a big problem. Therefore, in order to send as much information as possible to a node B, a transmission mode for transmitting channel quality information of as many sub-bands as possible is selected. In contrast, when the uplink load is high, increase in the quantity of channel quality information fed back by the UE causes further increase in the uplink load. Therefore, a transmission mode is selected to make the load as small as possible.

Meanwhile, when the UE moves at a high speed, it is difficult to efficiently perform the AMC operation because the high speed of the UE implies that the channel status of the UE rapidly changes. Even though the UE has already measured and fed back channel quality information, the channel status may have changed and the UE has a low adaptability to the channel at the time point at which AMC data determined based on the fed back information are actually transmitted. Therefore, when the UE moves at a high speed, instant channel quality information is not highly available, and transmission of an average value of the channel quality information over the fast channel change shows no big difference in the AMC performance from transmission of instant channel quality information. Therefore, when UE moves at a high speed, it is preferable to select a mode which causes the uplink load to be as small as possible.

When the UE moves at a low speed, which corresponds to an environment suitable for use of the AMC, it is preferable to determine the transmission mode in consideration of other conditions. It is possible to achieve an optimum determination in view of the service benefit. This may be done by selecting a transmission mode in which high-class UEs, such as users paying large amounts or UEs desired to be assigned priorities in view of the system policy, feed a large quantity of channel quality information back to a UE despite taking up a rather large quantity of uplink load. It is preferable to select a transmission mode that results in a relatively small uplink load for low class UEs.

Further, the channel quality information transmission mode may change according to service types. For example, in the case of providing real-time traffic sensitive to delay, if the transmitted data like the VoIP is not large, there is no problem in supporting a service while satisfying a required Quality of Service (QoS) when the UE selects one sub-band with the best channel condition from the N sub-bands and feeds back the channel quality information of the selected sub-band. It is not necessary to increase the uplink load by feeding back channel quality information of multiple sub-bands for such traffics.

For real-time traffic requiring a relatively large number of bands, such as traffic for a video conference, it is preferable to increase the number of sub-bands, and the channel quality information of which is to be feed back. For traffic comprising a relatively generous sensitivity to service time delay, it is possible to freely determine the transmission mode in consideration of additional conditions as well as the average required data rate as for the real-time traffic.

Hereinafter, structures of a node B and a UE for the above-discussed operation will be briefly described. Next, a process for setup and change of a channel quality information transmission mode in order to apply the AMC according to an exemplary embodiment of the present invention will be discussed.

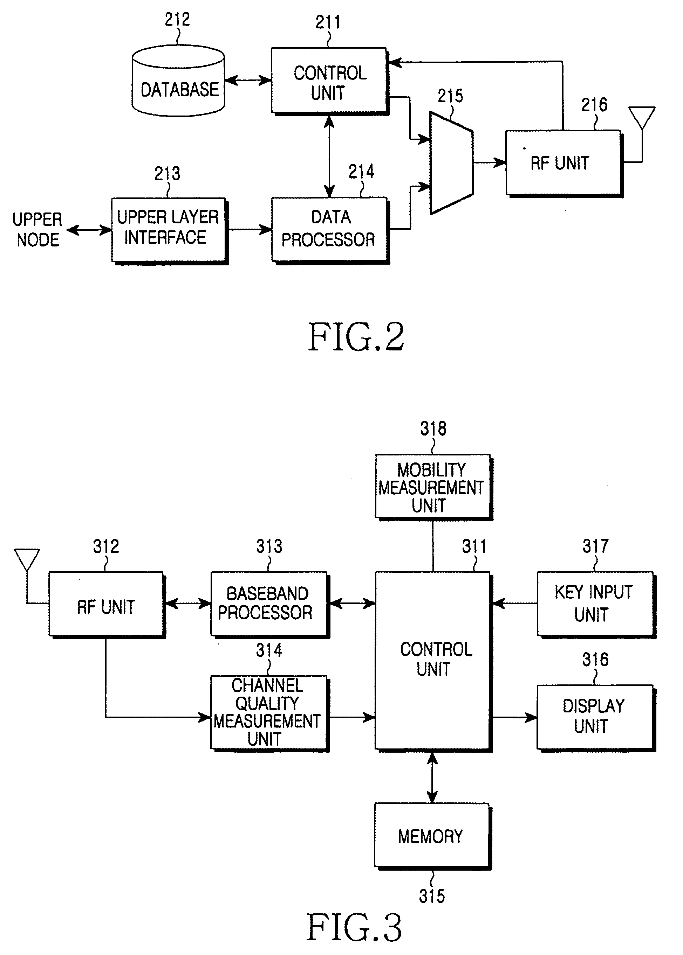

FIG. 2 is a block diagram of a node B for determining a channel quality information transmission mode for the AMC operation according to an exemplary embodiment of the present invention. Hereinafter, an operation of a node B according to an exemplary embodiment of present invention will be described.

An upper layer interface 213 is connected to an upper node, such as a core network node, and processes data for transmission/reception of the data to/from the upper node. Specifically, the upper layer interface 213 receives various signaling signals and data signals, provides a data processor 214 with data to be transmitted to a UE from among the received signals, and provides a control unit 211 with the signaling signals (the connection is not shown). Further, the upper layer interface 213 converts the format of the received data from the data processor 214 and transfers the converted data to the upper node. The data processor 214 outputs the data received from the upper layer interface 213 to a multiplexer 215 under the control of the control unit 211.

The control unit 211 performs scheduling, controls various operations of the node B, determines a channel quality information transmission mode according to an exemplary embodiment of the present invention, and generates and outputs a corresponding message to the multiplexer 215. Further, the control unit 211 can acquire load information of uplink and downlink from a Radio Frequency (RF) unit 216 and/or the data processor 214 in order to receive channel quality information about a channel status. As described above, various methods can be used in order to acquire the load information of the uplink and downlink. A database 212 provides the control unit 211 with information necessary in order to determine the channel quality information transmission mode. The database 212 may store the information necessary in order to determine the channel quality information transmission mode, such as class information of each UE, and service quality information of data provided by each UE, among others. The database 212 may also provide the stored information to the control unit 211. Further, a database 212 may store only the information of the user currently using the service, while the other information is managed by a specific node of an upper network.

The multiplexer 215 multiplexes received data from the data processor 214 and the control unit 211 and outputs the multiplexed data to the RF unit 216. Then, the RF unit 216 processes the data into a transmission format corresponding to each system and then up-converts the processed data into a signal of an RF band. Specifically, in an OFDM system, the multiplexer 215 modulates input data, performs Inverse Fast Fourier Transform (IFFT) on the modulated data, adds a Cyclic Prefix (CP) to the IFFTed data, converts the CP-added data to data of an RF band, and then transmits the RF band data.

FIG. 3 is a block diagram of a UE for transmitting channel quality information according to an exemplary embodiment of the present invention.

An RF unit 312 down-converts an RF band incoming signal and provides the down-converted signal to a baseband processor 313. Then, the baseband processor 313 converts the down-converted incoming signal to data symbols according to a scheme provided by the system. For example, in the case of an OFDM system, the baseband processor 313 eliminates the CP from the down-converted incoming signal, performs Fast Fourier Transform (FFT) on the CP-eliminated incoming signal, and then demodulates the FFTed incoming signal. When the baseband processor 313 transmits data, the baseband processor 313 performs a process similar to the transmission process as in FIG. 2. The incoming data that has been processed by the baseband processor 313 is input to a control unit 311.

Meanwhile, the RF unit 312 provides a portion of the incoming signal to a channel quality measurement unit 314. The channel quality measurement unit 314 measures or obtains channel quality information from the incoming signal and provides the channel quality information to the control unit 311. Then, the control unit 311 selects necessary channel quality information from the entire channel quality information according to either a negotiation with the node B or a request from the node B, and then transmits only the selected channel quality information in the uplink direction. At this time, the control unit 311 performs the uplink transmission of the selected channel quality information by generating a message for transmission of the selected channel quality information and then outputting the message to the baseband processor 313.

Meanwhile, the UE includes a memory 315 for storing user data and control data, among others. The UE also includes a key input unit 317 for generating a key signal according to user's input for interfacing with the user and then providing the key signal to the control unit 311, and a display unit 316 for reporting the status of the UE to the user through letters, pictures, and characters, among others.

The UE further includes a mobility measurement unit 318 for measuring the mobility of the UE. The mobility measurement unit 318 manages timers either controlled by the node B or set by the UE itself. The mobility measurement unit 318 also measures and stores the mobility values of the UE, which are expressed as the number of cells through which the UE has passed while each timer operates, and the standard deviation or numerical average speed of signal intensities for the entire frequency bands or downlink pilot channels, among others. The control unit 311 determines the speed status of the UE by referring to the mobility values measured by the mobility measurement unit 318, reports the determined speed status to the node B, and then reports channel quality information according to a channel quality information transmission mode determined by the node B based on the speed status.

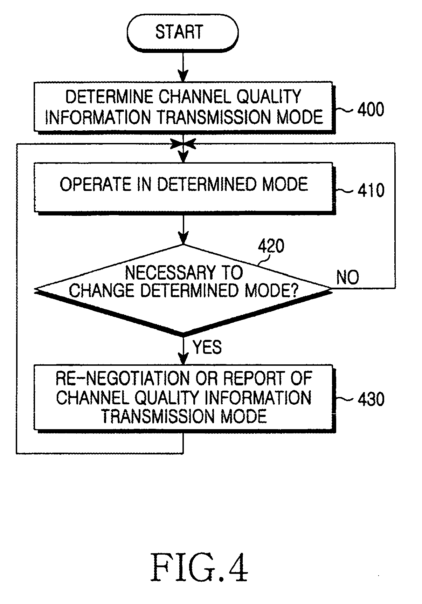

The most advantageous channel quality information transmission mode may change according to environmental conditions. First, a process for determining a channel quality information transmission mode according to an exemplary embodiment of the present invention will be described with reference to FIG. 4.

FIG. 4 is a flowchart of a process for determining a channel quality information transmission mode in a wireless communication system according to an exemplary embodiment of the present invention. As described above, the wireless communication system may take various channel quality information transmission modes.

When a node B performs communication with a UE, the node B determines one channel quality information transmission mode from among the various channel quality information transmission modes in step 400. That is, based on the contents of Table 1, the node B selects one channel quality information transmission mode. Such selection of one channel quality information transmission mode may be achieved through negotiation between the UE and the node B. The UE performs channel quality information according to the transmission mode determined in step 400. Then, in step 410, the node B receives channel quality information from the UE according to the determined channel quality information transmission mode. Then, the node B selects the best channel (such as at least one sub-band) from the received channel quality information, and then transmits data to the UE through the selected channel.

Meanwhile, it may become necessary to change the channel quality information transmission mode while the UE or the node B determines the channel quality. For example, when the UE determines that it is necessary to change the channel quality information transmission mode in step 420 during call connection according to change in the status (for example channel environment) of the UE, the UE can request change of the current channel quality information transmission mode to another channel quality information transmission mode. Also, when the node B determines that the uplink or downlink channel environment has changed, the node B requests the UE to change the channel quality information transmission mode to another mode. In step 430, the channel quality information transmission mode is changed through re-negotiation between the node B and the UE. Otherwise, if the node B determines that it is necessary to change the channel quality information transmission mode, the node B commands the UE to change the channel quality information transmission mode being used to another one without re-negotiation. The command is given according to one of the following methods:
(1) the node B commands a specific UE to change the channel quality information transmission mode or changes the channel quality information transmission mode through re-negotiation;
(2) the node B commands some UEs within the system to change the channel quality information transmission mode; and
(3) the node B commands all UEs within the system to change the channel quality information transmission mode.

The command is carried by common control information transmitted from the node B to the UEs. It should be noted that all of the above-mentioned steps may be performed by one system or some of them may be omitted. For example, change of the transmission mode is limited during the call connection.

According to one of the channel quality information transmitting methods proposed by an exemplary embodiment of the present invention, each node B selects one channel quality information transmission mode from various channel quality information transmission modes according to a situation of the node B itself, so that all UEs can use the selected channel quality information transmission mode.

In other words, although various channel quality information transmission modes are arranged for one system, the node B uses one channel quality information transmission mode during one transmission period. That is, all UEs controlled by the node B use the same transmission mode instead of using multiple transmission modes during one transmission period. To this end, the node B must report the very channel quality information transmission mode being used from among the various channel quality information transmission modes to the UEs controlled by the node B. If the node B wants to change the transmission mode, the node B reports the changed transmission mode to all UEs controlled by the node B through a broadcast message. That is, the node B uses the broadcast message so that all the UEs can share the information about the changed transmission mode.

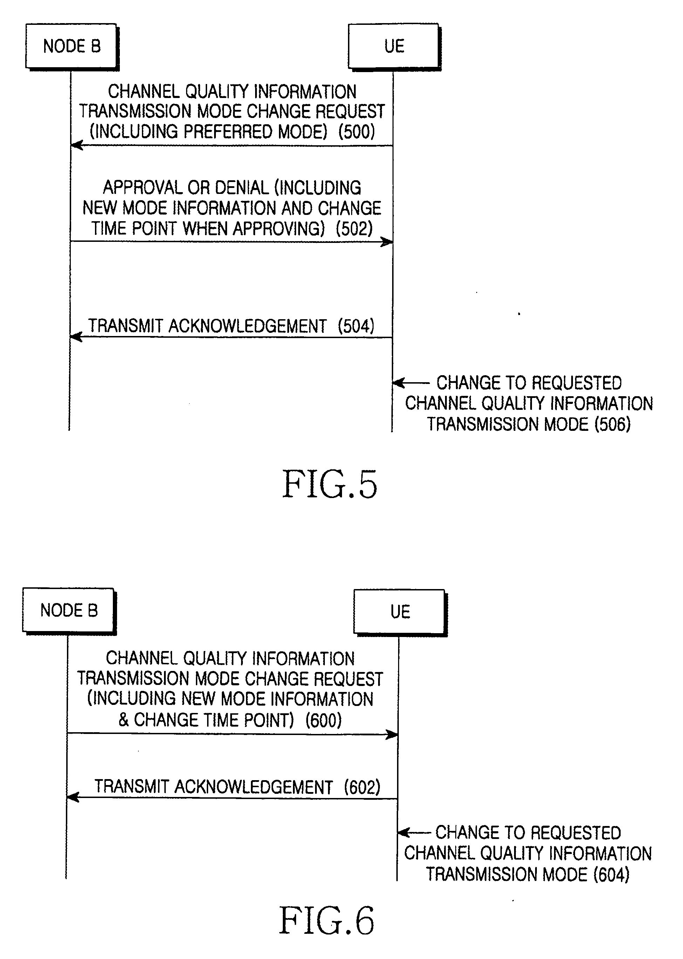

FIG. 5 is a message flowchart illustrating change in the transmission mode by a request from a UE according to an exemplary embodiment of the present invention.

Referring to FIG. 5, when it is determined that it is necessary to change the channel quality information transmission mode with reference to Table 1 described above (for example, when the channel status of the UE has been changed to a high-speed channel), the UE transmits a "channel quality information transmission mode change request" message to the node B in step 500. It is preferred that the channel quality information transmission mode change request message includes "preferred mode" information which indicates a transmission mode which the UE desires. Upon receiving the channel quality information transmission mode change request message including the preferred mode information, the node B determines an approval or a denial of the channel quality information transmission mode change request in consideration of various conditions as shown in Table 1, generates an approval or denial message containing a result of the determination, and then transmits the approval or denial message to the UE in step 502.

When the request has been approved, the transmitted approval message includes information about a mode change time point as well as the information about the determined mode. Upon receiving the mode change approval or denial message from the node B, the UE transmits an "Acknowledgement (ACK) message" to the node B in order to report successive reception of the message (step 504). Then, in step 506, the UE sets the changed mode and transmits the channel quality information in the changed mode at the mode change time point appointed in the approval message.

FIG. 6 is a message flowchart illustrating change in the transmission mode by a command of the node B according to an exemplary embodiment of the present invention. The signal flow in FIG. 6 corresponds to a case in which the node B commands change of the channel quality information transmission mode or broadcasts a changed channel quality information transmission mode.

The node B determines the transmission mode of the UE based on Table 1, and transmits a "channel quality information transmission mode change command" message to the UE (step 600). The channel quality information transmission mode change command message includes transmission mode information, which indicates a new transmission mode, and mode change time point information. Upon receiving the channel quality information transmission mode change command" message from the node B, the UE transmits an "Acknowledgement message" to the node B in order to report successive reception of the message (step 602). Then, the UE changes the transmission mode to a new transmission mode indicated by the node B at the time point appointed in the channel quality information transmission mode change command" message (step 604).

Hereinafter, exemplary embodiments of the present invention in relation to speed of the UE from among the factors for determining the channel quality information transmission mode will be described. As described above, factors determining the channel quality information transmission mode include downlink/uplink load, service type/QoS, speed of the UE, class of the UE, etc., among which representative information which can have changeability is the speed of the UE. Therefore, specific exemplary embodiments of the present invention of the determination of the channel quality information transmission mode and exemplary embodiments of the present invention relating to support for the channel quality information transmission mode in consideration of the mobility of the UE such as handover will be described while focusing on the speed of the UE. The following description is based on an assumption that the entire frequency band is divided into N number of sub-bands for the AMC (that is, AMC sub-bands). Each sub-band includes one or more continuous or discontinuous sub-carriers.

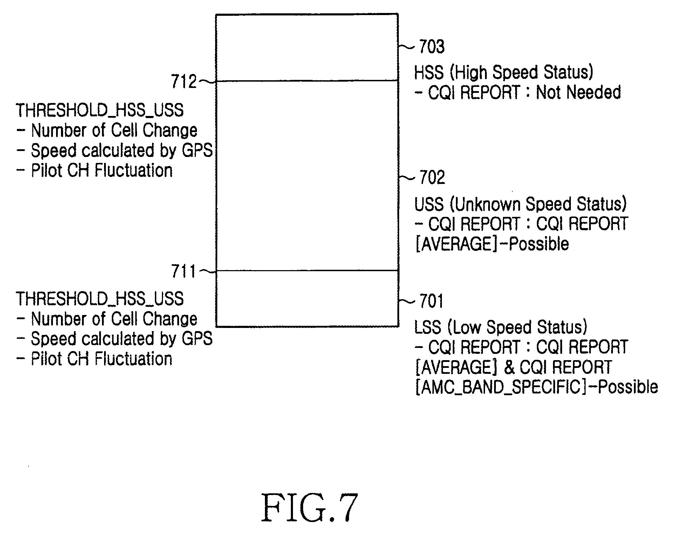

FIG. 7 illustrates channel quality information transmission modes which can be determined based on a speed status of the UE according to an exemplary embodiment of the present invention. Hereinafter, three levels of the speed status are defined, and use of different channel quality information transmission modes according to the levels of the speed status will be described.

Referring to FIG. 7, reference numeral 701 denotes a Low Speed Status (LSS) of the UE. The LSS 701 implies that it is highly probable that the channel environment of the UE does not rapidly change but is stable. At this time, the UE feeds back an average value of the channel quality of the entire N sub-bands and channel quality information of each of K sub-bands (K = N - M; M is an integer smaller than N and larger than 0; and K is an integer larger than or equal to 1 and smaller than or equal to N). In other cases, the UE feeds back only the channel quality information for each of the K sub-bands in the LSS 701.

If the channel quality information transmission mode is not limited by factors other than the speed of the UE, it is possible to feedback the channel quality information of the K sub-bands in the LSS 701. For example, even when the UE is in the LSS 701, if it is impossible to allocate a sub-band due to the downlink load or the QoS of the service requested by the UE, the UE can feed back only an average value of the channel quality information for the N sub-bands instead of feeding back the channel quality information of the K sub-bands.

That is to say, the LSS 701 refers to a low speed movement of the UE. At this time, the UE may feed back an average value of the channel quality information for the N sub-bands and/or the channel quality information for each of the K sub-bands. In determining the channel quality information transmission mode, it is of course possible to consider other factors in addition to the speed of the UE. That is, in the LSS 701, the channel quality information can be transmitted as long as the transmission of the channel quality information is not limited by other factors.

The average value of the channel quality for the N sub-bands can be used to determine a coding rate of a Distributed Resource Channel (DRCH), which does not belong to one sub-band but is distributed over all the bands, when the node B allocates the DRCH to the UE. Further, the average value of the channel quality for the N sub-bands can be used for power control, among others in communication with the UE. The channel quality information of each of the K sub-bands is used when each sub-band is allocated to the UE, and the number K of the sub-bands to be reported can be determined through negotiation with the UE and the node B either when the UE starts the service or during the service. The negotiation is performed in consideration of the class of the UE, the service requested by the UE and the QoS of the service, and the downlink/uplink load, among others.

Reference numeral 703 denotes a High Speed Status (HSS) of the UE. In the HSS 703, the channel quality information cannot be used in allocation of the DRCH or each sub-band or power control since the channel environment of the UE can rapidly change. This is because the channel quality information at the rapidly changing channel environment of the HSS 703 has no reliability and is not stable. Therefore, in the HSS 703, it is unnecessary to feed back the average value of the channel quality for the N sub-bands and the channel quality information of the K sub-bands. In the HSS 703, the UE does not perform the transmission of the channel quality information. Therefore, the radio resources saved due to the non-transmission of the channel quality information can be used in another signaling or data transmission.

Reference numeral 702 denotes an Unknown Speed Status (USS) which is neither the HSS 703 nor the LSS 701. The USS 702 may be an intermediate speed which is neither the high speed nor the low speed. Or, the USS 702 may be a status which is an instantly high or low speed but cannot satisfy conditions such as speed maintenance time required for the LSS 701. That is, the USS 702 implies that the UE moves at a continuous intermediate speed or at a discontinuous high or low speed that cannot be determined to be the HSS or the LSS. At the USS 702, the UE feeds back only the average value of the channel quality for the N sub-bands as the channel quality information. This is because the channel quality information for each of the K sub-bands at a status in which the speed status of the UE is not exactly known does not have enough reliability and stability to be used for allocation of the sub-bands based on the channel quality information.

The three speed status levels 701 to 703 shown in FIG. 7 are used to determine the channel quality information transmission mode. The speed status of the UE described above are indispensable for determination of the channel quality information transmission mode, and it is possible to reduce the overhead of the channel quality information fed back from the UE to the node B by the three levels of speed status 701 to 703. If only one or two speed status levels are used, information needed to determine the channel quality information transmission mode is insufficient, and it is thus impossible to efficiently determine the channel quality information transmission mode.

When more sub-divided levels are used, the complexity in the calculation of the speed of the UE increases, and the overhead of the information fed back to the node B from the UE according to the sub-divided levels also increases. Therefore, as shown in FIG. 7, it is preferred to define three levels of UE speed, which can achieve efficient allocation of the channel quality information transmission mode and can reduce the complexity of the UE and the overhead of the speed information fed back to the node B. However, in order to reduce the overhead fed back or to achieve efficient scheduling, it is possible to use less than three levels or more than three speed status levels.

Reference numeral 711 denotes an LSS-USS threshold condition which draws a boundary between the LSS 701 and the USS 702, and uses THRESHOLD_USS_LSS as its condition parameter. Reference numeral 712 denotes an HSS-USS threshold condition which draws a boundary between the HSS 703 and the USS 702, and uses THRESHOLD_HSS_USS as its condition parameter. When a measured mobility of the UE satisfies the LSS-USS threshold condition 711, the speed status of the UE is determined as the LSS 701. When the measured mobility of the UE satisfies the HSS-USS threshold condition 712, the speed status of the UE is determined as the HSS 703. When the measured mobility of the UE does not satisfy the LSS-USS threshold condition 711 or the HSS-USS threshold condition 712, the speed status of the UE is determined as the USS 702. The mobility of the UE may be measured through the following three methods.

The first method for determining the mobility of the UE is to use the number of cells through which the UE has passed during a predetermined time interval (which will be referred to as "algorithm 0" hereinafter). In this method, each of the parameters THRESHOLD_USS_LSS and THRESHOLD_HSS_USS include a timer and the number of cells passed through. For example, the parameters THRESHOLD_USS_LSS and THRESHOLD_HSS_USS may be constructed as follows:
THRESHOLD_USS_LSS: timer T1, the number N1 of cells passed through THRESHOLD_HSS_USS: timer T2, the number N2 of cells passed through

The UE determines the speed status as the LSS when the number of cells through which the UE has passed during T1 is smaller than N1, and determines the speed status as the HSS when the number of cells through which the UE has passed during T2 is larger than N2. When neither of the two conditions are satisfied, the UE determines the speed status as the USS. T1 and T2 may have different values or the same value, and N2 may usually be larger than N 1.

The second method for determining the mobility of the UE is to use a fluctuation of an average value of the signal intensity of the N sub-bands or the downlink pilot channel measured during a predetermined time interval (which will be referred to as "algorithm 1" hereinafter). In this method, each of the parameters THRESHOLD_USS_LSS and THRESHOLD_HSS_USS include a timer and a standard deviation. For example, the parameters THRESHOLD_USS_LSS and THRESHOLD_HSS_USS may be constructed as follows:
THRESHOLD_USS_LSS: timer T3, a standard deviation V1 of signal intensities
THRESHOLD_HSS_USS: timer T4, a standard deviation V2 of signal intensities

The UE determines the speed status as the LSS when the standard deviation of the signal intensities for the N sub-bands or the downlink pilot channel measured by the UE during T3 is smaller than V1, and determines the speed status as the HSS when the standard deviation of the signal intensities for the N sub-bands or the downlink pilot channel measured by the UE during T4 is larger than V2. When neither of the two conditions are satisfied, the UE determines the speed status as the USS. The fact that the standard deviation of the signal intensities measured for the N sub-bands or the downlink pilot channel is large implies that the channel status rapidly changes, thereby causing intensive variation of the measured signal intensity with respect to the average value of the signal intensities. In contrast, the fact that the standard deviation of the signal intensities measured for the N sub-bands or the downlink pilot channel is small implies that the channel status is relatively stable, resulting in a small variation of the measured signal intensity with respect to the average value of the signal intensities. T3 and T4 may have different values or the same value, and V2 is usually larger than V1.

The third method for determining the mobility of the UE is to use an average speed actually measured during a predetermined time interval by a UE which can receive a Global Positioning System (GPS) signal or is equipped with a separate speed measurement module (which will be referred to as "algorithm 2" hereinafter). In this method, each of the parameters THRESHOLD_USS_LSS and THRESHOLD_HSS_USS include a timer and an average numerical speed. For example, the parameters THRESHOLD_USS_LSS and THRESHOLD_HSS_USS may be constructed as follows:
THRESHOLD_USS_LSS: timer T5, an average numerical speed S1
THRESHOLD_HSS_USS: timer T6, an average numerical speed S2

The UE determines the speed status as the LSS when an average numerical speed (for example, 15 Km/h) measured during T5 is smaller than S1, and determines the speed status as the HSS when an average numerical speed (for example, 68 Km/h) measured during T6 is larger than S2. When neither of the two conditions are satisfied, the UE determines the speed status as the USS. T5 and T6 may have different values or the same value, and S2 may usually be larger than S1.

When the speed status has been changed as a result of determination based on THRESHOLD_USS_LSS and THRESHOLD_HSS_USS, the UE reports the changed speed status to the node B, and the node B determines an available channel quality information transmission mode based on the reported speed status and reports the determined channel quality information transmission mode to the UE.

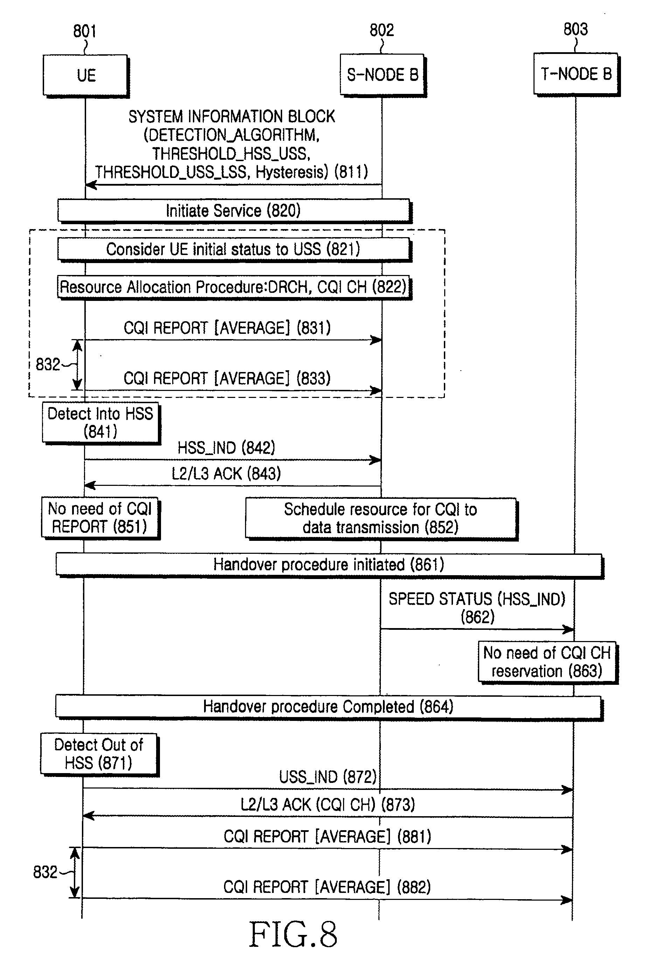

FIG. 8 is a message flowchart which illustrates a process for transmitting channel quality information for a speed status of the UE according to a first exemplary embodiment of the present invention. Reference numeral 801 denotes a UE (the speed status of the UE 801 is changing from the USS to the HSS), reference numeral 802 denotes a serving node B for the UE 801, and reference numeral 803 denotes a target node B controlling a target cell to which the UE will handover from a serving cell controlled by the serving node B 802.

In step 811, the serving node B 802 transmits parameters used for use in the determination of the speed status of the UE 801 to the UE 801 through system information broadcasted within the cell. The transmitted parameters include THRESHOLD_USS_LSS and THRESHOLD_HSS_USS. The THRESHOLD_USS_LSS and THRESHOLD_HSS_USS include different values depending on the algorithm for determination of the speed status of the UE. Examples which may be included in the system information for the three types of speed status determination algorithms are as follows.
Algorithm 0 (using the number of cells passed through)
   - THRESHOLD_USS_LSS
   > Timer T 1
   > N 1 (the number of cells passed through)
   - THRESHOLD_HSS_USS
   > Timer T2
   > N2
Algorithm 1 (using variation of signal intensities)
   - THRESHOLD_USS_LSS
   > Timer T3
   > V 1 (standard variation of signal intensities)
   - THRESHOLD_HSS_USS
   > Timer T4
   > V2
Algorithm 2 (using actual average speed)
   - THRESHOLD_USS_LSS
   > Timer T5
   >S1 [Km/h]
   - THRESHOLD_HSS_USS
   > Timer T6
   > S2 [Km/h]

Multiple values according to the three types of speed status determination algorithms may be included in the system information, and the UE selects one of the speed status determination algorithms according to the capability of the UE. For example, a UE capable of receiving a GPS signal selects algorithm 2, while a UE incapable of receiving a GPS signal selects algorithm 0 or 1. According to another exemplary embodiment of the present invention, the serving node B 802 transmits information including one or more speed status determination algorithms to a specific UE according to the capability of the UE.

In step 820, the UE 801 requests a service from the serving node B 802 in order to start to receive the service. If the UE 801 requests the service without transmitting information indicating the speed status of the UE 801 and the serving node B 802 does not recognize the speed status of the UE 801, the serving node B 802 considers the speed status of the UE 801 as the USS (step 821). This is because it is possible to minimize an impact due to possible erroneous determination about the speed status of the UE by considering the speed status as the USS rather than the HSS or the LSS. When the speed status has been erroneously determined as the HSS even though it is not the HSS, it is impossible to set a modulation method or a coding rate to be used in a DRCH when the DRCH is allocated and to perform initial power control. When the speed status has been erroneously determined as the LSS, even though it is not the LSS, the UE may unnecessarily transmit channel quality information for each of the K sub-bands.

When the UE requests the service in step 820, the UE 801 can report the speed status of the UE 801 itself to the serving node B 802 in step 820. This can be done if the UE 801 is already performing an operation for determination of the speed status while either receiving or not receiving another service different from the service the UE requested. Then, in step 821, the serving node B 802 exactly sets the speed status of the UE 801 in accordance with the report from the UE 801.

After the speed status of the UE 801 is set as the USS, the serving node B 802 allocates resources/channels for the requested service in step 822. In step 822, because the serving node B does not know the speed status of the UE 801 and has not received a report for channel quality information about each sub-band, the serving node B 802 allocates the DRCH instead of the sub-band. Further, in step 822, the serving node B 802 reserves resources of a CQI channel for receiving channel quality information from the UE 801 and reports the reserved resources to the UE 801. At this time, because the speed status of the UE 801 has been considered as the USS in step 821, the serving node B 802 allocates CQI channel resources only enough for feedback of an average value of channel quality information of all the N sub-bands. As a result, the information about the allocated DRCH and CQI channel indicates the channel quality information transmission mode allowed for the UE 801. That is, the UE 801 recognizes the allowed channel quality information transmission mode based on the quantity of the resources of the CQI channel allocated in step 822.

In steps 831 to 833, the UE 801 transmits a channel quality information report message including the average channel quality value for the N sub-bands, that is, a CQI REPORT [AVERAGE], to the serving node B 802 by using the resources of the allocated CQI channel. The CQI REPORT [AVERAGE] is repeatedly transmitted at a predetermined CQI REPORT [AVERAGE] period 832. The CQI REPORT [AVERAGE] period 832 is either provided together with the resource/channel information of step 822 to the UE 801 or set as a fixed value.

In step 841, the UE 801 continuously measures the mobility of the UE 801 by using the parameters acquired in step 811, and recognizes that the UE 801 is in the HSS. Then, in step 842, the UE 801 transmits indication information or an indication message HSS_IND to the serving node B 802, which reports that the current speed status of the UE 801 is the HSS. The HSS_IND is included in and transmitted by a specific message or the CQI REPORT [AVERAGE]. In order to insert the HSS_IND into the CQI REPORT [AVERAGE], the CQI REPORT [AVERAGE] has bits predefined in order to indicate the HSS_IND. In step 843, the serving node B 802 transmits an ACK message of layer 2 or layer 3 to the UE 801 in response to the HSS_IND.

After receiving the ACK message in step 843, the UE 801 does not perform the CQI report in step 851. At this time, no CQI report implies that the UE does not feed back an average value of channel quality of the N sub-bands as well as the channel quality information of each of the K sub-bands. After transmitting the ACK in step 843, the serving node B 801 can use the resource of the CQI channel, which was allocated for the UE 801 in step 822, for another purpose in step 852. For example, the resource may be allocated to a data transmission channel of the UE 801 or to another UE. This is because the UE 801 is in the HSS and does not transmit any channel quality information and it is thus inefficient to reserve resources of a CQI channel for periodic transmission of channel quality information by the UE 801.

In step 861, the UE 801 moves from the serving cell controlled by the serving node B 802 to the target cell to begin a handover procedure. The handover procedure may be based on the UE 801 or the network, and a detailed description thereof will be omitted because it has no relation to the core of an exemplary embodiment of the present invention. After the handover procedure is started, the serving node B 802 reports the current speed state of the UE 801 to the target node B 803 which controls the target cell in step 862. At this time, the current speed state of the UE 801 and information for use in the determination of the channel quality information transmission mode such as the class of the UE 801 may be reported. Specifically, in step 862, the serving node B 802 transmits HSS_IND to the target node B 803, which reports that the current speed state of the UE 801 is the HSS.

In step 863, the target node B 803 does not reserve resources for transmission of the channel quality information for the UE 801 in the HSS. Then, in step 864, the handover procedure is completed, and the movement of the UE 801 to the target cell controlled by the target node B 803 is completed. Because the UE 801 is in the HSS, the UE 801 does not transmit the channel quality information to the target node B 803.

While the UE 801 is connecting with the target node B 803, the UE 801 recognizes that its speed state has been changed from the HSS to the USS (step 871). The speed status determination algorithm may be selected from the three exemplary algorithms described above. In step 872, the UE 801 transmits indication information or an indication message reporting the changed speed status (USS), that is, USS_IND, to the target node B 803. The USS_IND is included in and transmitted by a specific message or another message such as the CQI REPORT [AVERAGE]. In step 873, the target node B 803 transmits an ACK message of layer 2 or layer 3 to the UE 801 in response to the USS_IND. The ACK message includes CQI_CH which indicates information about resources of the CQI channel allocated to the UE 801 for transmission of the channel quality information. Because the UE 801 is in the USS, the CQI_CH indicates resources for the CQI REPORT [AVERAGE], and it is unnecessary to reserve resources for transmission of channel quality information of each of the K sub-bands. As a result, the CQI_CH indicates the channel quality information transmission mode allowed for the UE 801.

In steps 881 and 882, the UE 801 transmits CQI REPORT [AVERAGE], which indicates the average channel quality value for the N sub-bands by the resources according to the CQI_CH, to the target node B 803 at a predetermined CQI REPORT [AVERAGE] period. The CQI REPORT [AVERAGE] period is either indicated by the CQI_CH or set as a fixed value.

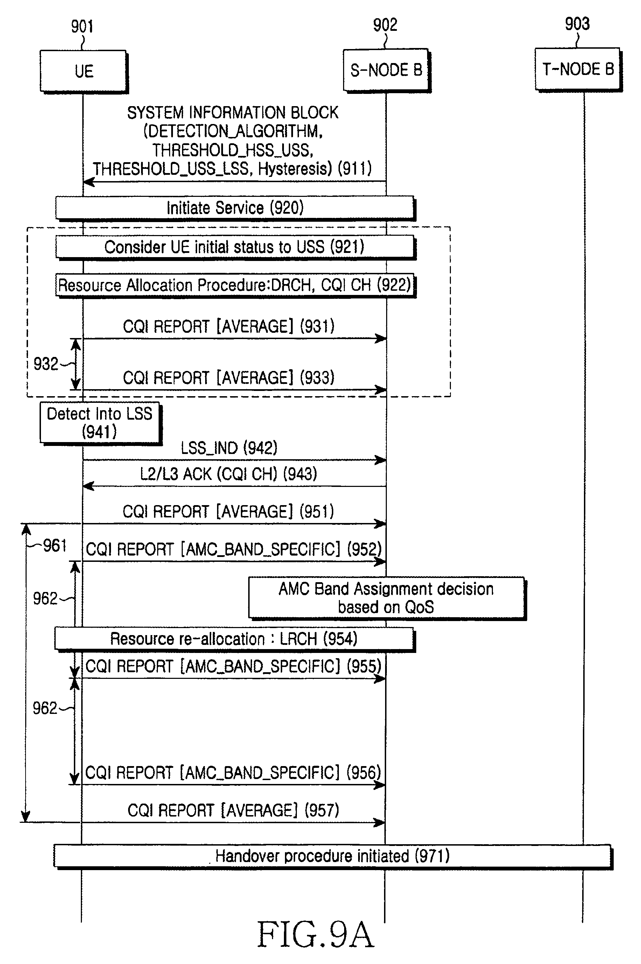

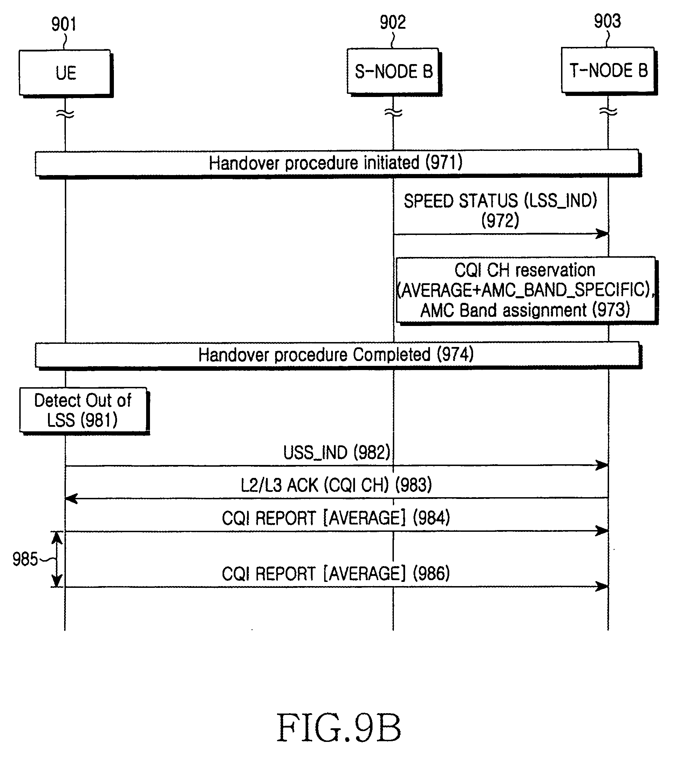

FIGs. 9A and 9B illustrate a message flowchart of a process for transmission of channel quality information according to the second exemplary embodiment of the present invention, wherein reference numeral 901 denotes a UE (the speed status of the UE 901 is changing from the USS to the LSS), reference numeral 902 denotes a serving node B for the UE 901, and reference numeral 903 denotes a target node B controlling a target cell to which the UE will handover from a serving cell controlled by the serving node B 902.

In step 911, the serving node B 902 transmits parameters used for use in the determination of the speed status of the UE 901 to the UE 901 through system information broadcasted within the cell. The transmitted parameters include THRESHOLD_USS_LSS and THRESHOLD_HSS_USS. In step 920, the UE 901 requests a service from the serving node B 902 to start to receive the service. If the UE 901 requests the service without transmitting information indicating the speed status of the UE 901 and the serving node B 902 does not recognize the speed status of the UE 901, the serving node B 902 considers the speed status of the UE 901 as the USS (step 921).

When the UE requests the service in step 920, if the UE 901 is already performing an operation for determination of the speed status while either receiving or not receiving another service different from the service the UE requested, the UE 901 can report the speed status of the UE 901 itself to the serving node B 902 in step 920. Then, in step 921, the serving node B 902 exactly sets the speed status of the UE 901 in accordance with the report from the UE 901.

After the speed status of the UE 901 is set as the USS, the serving node B 902 allocates resources/channels for the requested service in step 922. In step 922, because the serving node B does not know the speed status of the UE 901 and has not received a report for channel quality information about each sub-band, the serving node B 902 allocates the DRCH instead of the sub-band. Further, in step 922, the serving node B 902 reserves resources of a CQI channel for receiving channel quality information from the UE 901 and reports the reserved resources to the UE 901. According to an exemplary implementation, once the speed status of the UE 901 had been considered to be the USS in step 921, the serving node B 902 allocates CQI channel resources only enough for feedback of an average value of channel quality information of all the N sub-bands. The information about the resources of the CQI channel indicates the channel quality information transmission mode allowed for the UE 901.

In steps 931 to 933, the UE 901 transmits a channel quality information report message including the average channel quality value for the N sub-bands, that is, a CQI REPORT [AVERAGE], to the serving node B 902 at a predetermined CQI REPORT [AVERAGE] period 832 by using the resources of the allocated CQI channel.

In step 941, the UE 901 continuously measures the mobility of the UE 901 by using the parameters acquired in step 911, and recognizes that the UE 901 is in the LSS. Then, in step 942, the UE 901 transmits indication information or an indication message HSS_IND to the serving node B 902, which reports that the current speed status of the UE 901 is the LSS. The LSS_IND is included in and transmitted by a specific message or the CQI REPORT [AVERAGE]. To insert the LSS_IND into the CQI REPORT [AVERAGE], the CQI REPORT [AVERAGE] has bits predefined to indicate the LSS_IND. In step 943, the serving node B 902 transmits an ACK message of layer 2 or layer 3 to the UE 901 in response to the LSS_IND.

The ACK message includes CQI_CH which indicates information about resources of the CQI channel allocated to the UE 901 for transmission of the channel quality information. If the transmission of the channel quality information transmission mode for each of the K sub-bands is not limited by other factors, such as a class of the UE, a service type requested by the UE, a requested QoS, and downlink/uplink load, except for the speed of the UE, it is possible to feed back the channel quality information of each of the K sub-bands as well as the average channel quality value for the N sub-bands in the USS. When the serving node B 902 makes a determination to feedback the channel quality information of each of the K sub-bands as well as the average channel quality value for the N sub-bands as described above, the CQI_CH includes information about resources of the CQI channel required for the transmission of multiple pieces of channel quality information. As a result, the CQI_CH indicates a channel quality information transmission mode allowed for the UE 801.

In the process shown in FIGs. 9A and 9B, the channel quality information of each sub-band is expressed as "CQI REPORT [AMC_BAND_SPECIFIC]." Further, the CQI_CH includes period information for transmission of the CQI REPORT [AMC_BAND_SPECIFIC]. If the CHI_CH in step 943 includes information indicating resources and periods of the CQI channel for the CQI REPORT [AMC_BAND_SPECIFIC], the transmission period of the CQI REPORT [AMC_BAND_SPECIFIC] thereafter is changed based on period information indicated by the ACK message.

In steps 951 and 957, the UE 901 periodically transmits the average channel quality value for the N sub-bands, that is CQI REPORT [AVERAGE], to the serving node B 902 at the CQI REPORT [AVERAGE] period 961. Further, if the UE 901 has been assigned resources for transmission of the channel quality information of each sub-band through the CQI_CH, the UE 901 transmits the channel quality information of each sub-band, that is, CQI REPORT [AMC_BAND_SPECIFIC], to the serving node B 902 at the CQI REPORT [AMC_BAND_SPECIFIC] period 962 in steps 952, 955, and 956. Although the CQI REPORT [AVERAGE] and the CQI REPORT [AMC_BAND_SPECIFIC] are transmitted at different periods 961 and 962 in the process shown in FIGs. 9A and 9B, it is possible to transmit one message including both the average channel quality value for the N AMC sub-bands and the channel quality information of each sub-band at the same period.

In step 953, the serving node B 902 determines whether to allocate a sub-band by referring to the class of the UE and the QoS of the service that the UE 901 requested according to the CQI REPORT [AMC_BAND_SPECIFIC] of step 952. If the serving node B 902 determines to allocate at least one sub-band, the serving node B 902 reports the allocated sub-band or sub-bands to the UE 901 by using a resource re-allocation message (step 954).

In step 971, the UE 901 moves from the serving cell controlled by the serving node B 902 to the target cell, so that a handover procedure is started. After the handover procedure is started, the serving node B 902 reports the current speed state of the UE 901 to the target node B 903 which controls the target cell (step 972). At this time, the current speed state of the UE 901 and information for use in the determination of the channel quality information transmission mode such as the class of the UE 901 may be reported. Specifically, in step 972, the serving node B 902 transmits LSS_IND to the target node B 903, which reports that the current speed state of the UE 901 is the LSS.

In step 973, as long as the transmission of the channel quality information transmission mode for each of the K sub-bands is not limited by other factors that determine the channel quality information transmission mode, the target node B 903 reserves resources of the CQI channel for transmission of the CQI REPORT [AVERAGE] and the CQI REPORT [AMC_BAND_SPECIFIC] for the UE 901. In step 974, the handover procedure is completed, and the movement of the UE 901 to the target cell controlled by the target node B 903 is completed. Thereafter, if the CQI REPORT [AMC_BAND_SPECIFIC] of the UE 901 is reported to the target node B 903, the target node B 903 may allocate at least one sub-band for the UE 901 by referring to the CQI REPORT [AMC_BAND_SPECIFIC] in step 973.

The target node B 903 allocates resources of the CQI channel similar to that of the serving node B 902 for transmitting the channel quality information of the UE 901 in the LSS, and receives the CQI REPORT [AVERAGE] and the CQI REPORT [AMC_BAND_SPECIFIC] from the UE 901 through the allocated resources. If the target node B 903 cannot allocate the resources of the same CQI channel as that of the serving node B 902, that is, if the resources of the CQI channel allocated by the serving node B 902 are already being used by the target node B 903, the target node B 903 allocates resources of a new CQI channel for receiving a report of the channel quality information from the UE 901, and reports the newly allocated resources to the UE 901. Then, the UE 901 transmits an average channel quality value for the N sub-bands and the channel quality information of each of the K sub-bands to the target node B 903 by using the new resources.

While the UE 901 is connecting with the target node B 903, the UE 901 recognizes that its speed state has been changed from the LSS to the USS (step 981). The speed status determination algorithm may be selected from the three exemplary algorithms described above. In step 982, the UE 901 transmits indication information or an indication message reporting the changed speed status (USS), that is, USS_IND, to the target node B 903. The USS_IND is included in and transmitted by a specific message or another message such as the CQI REPORT [AVERAGE]. In step 983, the target node B 903 transmits an ACK message of layer 2 or layer 3 to the UE 901 in response to the USS_IND. The ACK message includes CQI_CH which indicates information about resources of the CQI channel allocated to the UE 901 for transmission of the channel quality information. Because the UE 901 is in the USS, the CQI_CH indicates resources for the CQI REPORT [AVERAGE], which may be different from resources for the previously used CQI REPORT [AVERAGE]. It is unnecessary to reserve resources for transmission of channel quality information of each of the K sub-bands.

In steps 984 and 986, the UE 901 transmits the CQI REPORT [AVERAGE], which indicates the average channel quality value for the N sub-bands by the resources according to the CQI_CH, to the target node B 903 at a predetermined CQI REPORT [AVERAGE] period 985. The CQI REPORT [AVERAGE] period 985 is indicated by the CQI_CH.

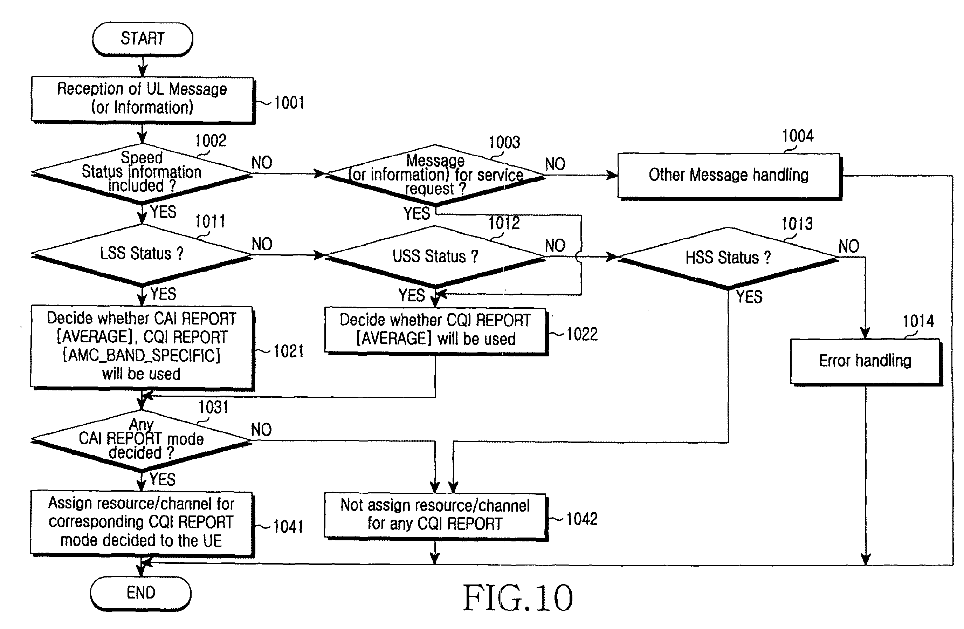

FIG. 10 is a flowchart illustrating an operation of a node B for determining a channel quality information transmission mode according to an exemplary embodiment of the present invention.

Referring to FIG. 10, a node B receives an uplink message or information from a UE in step 1001, and determines if the received information or message includes information indicating the speed status of the UE in step 1002. If the received information or message does not include indication information, the node B determines if the received information or message requests service or resource/channel in step 1003. If the received information or message requests service or resource/channel, the node B determines that the initial speed status of the UE is the USS and only the CQI REPORT [AVERAGE] is available for the channel quality information of the UE, and proceeds to step 1022.

In step 1022, the node B determines that the UE will use the USS transmission mode for transmitting the CQI REPORT [AVERAGE], and proceeds to step 1031. In step 1031, the node B determines if the channel quality information will be transmitted according to the channel quality information transmission mode determined for the UE. Meanwhile, in step 1022, the node B can determine a final channel quality information transmission mode based on other factors for determination of the channel quality information transmission mode, such as UE class, the type of the service requested by the UE, requested QoS, and downlink/uplink load, among others. If the node B determines that the channel quality information will be transmitted in step 1031, the node B reserves resources of a CQI channel for transmission of the CQI REPORT [AVERAGE] and allocates the reserved resources to the UE. In contrast, if the node B determines that the channel quality information will not be transmitted in step 1031, the node B does not reserve or allocate resources for a CQI channel of the UE in step 1042. Meanwhile, if the information or message received in step 1003 does not request service or resource/channel, the node B properly processes the received information or message in step 1004.

If the information or message received in step 1002 includes the information indicating the speed status of the UE, the node B determines if the information indicates the LSS in step 1011. If the information indicates the LSS, the node B determines to use the LSS transmission mode for transmitting both the CQI REPORT [AVERAGE] and the CQI REPORT [AMC_BAND_SPECIFIC] for the UE and then proceeds to step 1031. The determination in step 1021 is based on the other factors for determination of the channel quality information transmission mode. In step 1021, it is possible to determine whether to transmit both the CQI REPORT [AVERAGE] and the CQI REPORT [AMC_BAND_SPECIFIC], or to transmit one of them, or to transmit neither of them.

In step 1031, the node B determines if the channel quality information will be transmitted from the UE. If the node B determines in step 1031 that the channel quality information will be transmitted from the UE, the node B reserves resources of a CQI channel for at least one of the CQI REPORT [AVERAGE] and the CQI REPORT [AMC_BAND_SPECIFIC] according to the channel quality information transmission mode determined in step 1021 and allocates the reserved resources of the CQI channel to the UE in step 1041. In contrast, if the node B determines in step 1031 to use neither of the CQI REPORT [AVERAGE] and the CQI REPORT [AMC_BAND_SPECIFIC], the node B does not reserve or allocate resources for the CQI channel of the UE in step 1042.

If a determination is made in step 1011 that the information does not indicate the LSS, the node B determines in step 1012 if the information indicates the USS. If the information indicates the USS, the node B determines that only the CQI REPORT [AVERAGE] is available for the channel quality information of the UE, and proceeds to step 1022.

If a determination is made in step 1012 that the information does not indicate the USS, the node B determines in step 1013 whether the information indicates the HSS. If the speed status information indicates the HSS, the node B determines that channel quality information for the UE is unnecessary and proceeds to step 1042 in which the node B does not reserve or allocate resources for the CQI channel of the UE. If it is determined in step 1013 that the speed status information does not indicate the HSS, the node B proceeds to step 1014 in which the node B decides the process as an error.

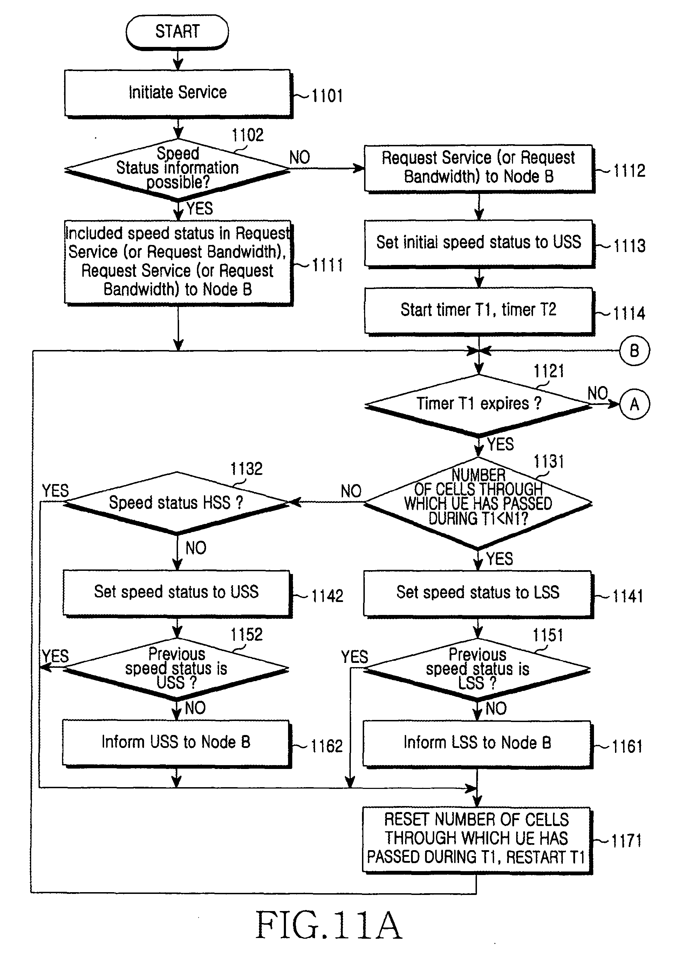

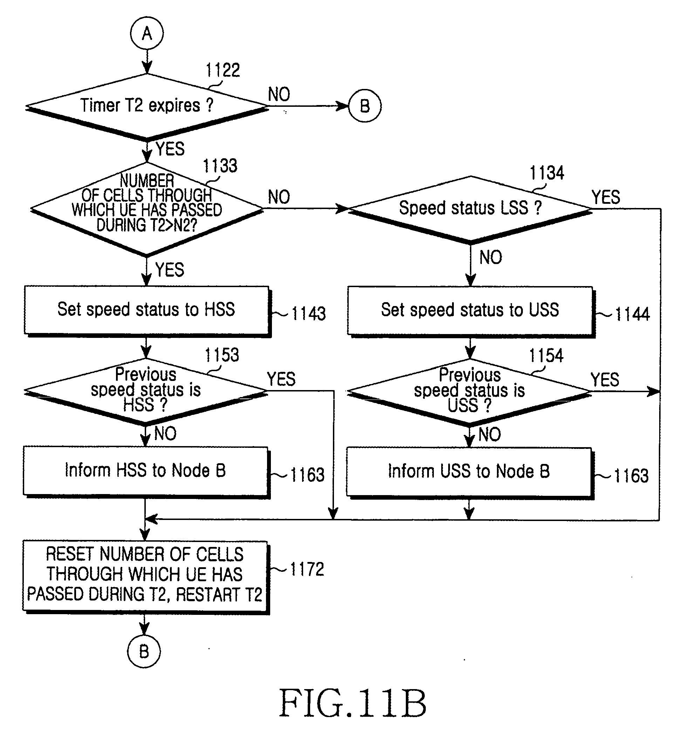

FIGs. 11A and 11B illustrate a flowchart of an operation of a UE for determining the speed status of the UE according to the first exemplary embodiment of the present invention.

Referring to FIG. 11A, the UE requests a service or resources/channels for the service in step 1101. Then, in step 1102, the UE determines if the UE currently possesses available speed status information. For example, the UE may be performing an operation for determination of the speed status because it is already receiving another service instead of the service which the UE wants to request or may keep on performing the operation for determination of the speed status before requesting the service. If the UE currently possesses the speed status information, the UE proceeds to step 1111 in which the UE transmits a service (or resource/channel) request information message including the speed status information to the node B, and then proceeds to step 1121. By contrast, if the UE determines in step 1102 that the UE currently does not possess available speed status information, the UE proceeds to step 1112 in which the UE transmits a service (or resource/channel) request message including no speed status information to the node B, and then sets the initial speed status to the USS in step 1113.

Although not shown in FIG. 11A, as a modification of steps 1112 and 1113, the UE may first set the initial speed status to the USS, and may then transmit a service (or resource/channel) request information message comprising the initial speed status set to the USS to the node B. As described above, the UE sets the initial speed status to the USS if the UE currently possesses no available speed status information when the UE requests a service or resources/channels for the service.

After step 1113, the UE starts timers T1 and T2 provided by system information. The timers T1 and T2 and the number N1 and N2 of cells passed through are as described above. When the time interval of the timer T1 expires in step 1121, the UE determines whether the number of cells through which the UE has passed during the time interval of the timer T1 is smaller than N1 in step 1131. If the number of cells passed through is smaller than N1, the UE sets the speed status to the LSS in step 1141. In step 1151, the UE determines whether the set speed status is equal to the previous speed status. If the set speed status is different from the previous speed status, the UE reports to the node B that the speed status of the UE has been changed to the LSS, and proceeds to step 1171. If the previous speed status is the LSS, the UE does not perform step 1161 and proceeds to step 1171. In step 1171, the UE initializes the number of cells through which the UE has passed during the time interval of the timer T1, restarts the timer T1, and returns to step 1121.

Meanwhile, if a determination is made in step 1131 that the number of cells through which the UE has passed during the time interval of the timer T1 is not smaller than N1, the UE determines if the current speed status is the HSS in step 1132. If the UE is not in the HSS, the UE sets the speed status to the USS in step 1142 and determines in step 1152 whether the setup speed status is equal to the previous speed status. If the previous speed status is not the USS, the UE reports to the node B in step 1162 that the speed status of the UE has been changed to the USS, and then proceeds to step 1171. If it is determined in step 1152 that the previous speed status is the USS, the UE does not perform step 1162 and proceeds to step 1171.

Meanwhile, if it is determined in step 1121 that the time interval of the timer T1 has not expired, the UE determines in step 1122 of FIG. 11B if the time interval of the timer T2 has expired. If the time interval of the timer T2 has expired, the UE determines in step 1133 if the number of cells through which the UE has passed during the time interval of the timer T2 is larger than N2. If the number of cells passed through is larger than N2, the UE sets the speed status to the HSS in step 1143. In step 1153, the UE determines if the setup speed status is equal to the previous speed status. If the previous speed status is not the HSS, the UE reports to the node B in step 1163 that the speed status has been changed to the HSS, and proceeds to step 1172. If the previous speed status is the HSS, the UE initializes the number of cells through which the UE has passed during the time interval of the timer T2, restarts the timer T2, and returns to step 1121.

Meanwhile, if it is determined in step 1133 that the number of cells passed through is not larger than N2, the UE determines in step 1134 if the current speed status is the LSS. If the UE is not in the LSS, the UE sets the speed status of the UE to the USS in step 1144, and determines in step 1154 if the setup speed status is equal to the previous speed status. If the previous speed status is not the USS, the UE reports to the node B in step 1164 that the speed status has been changed to the USS, and proceeds to step 1172. If it is determined in step 1154 that the previous speed status is the USS, the UE does not perform step 1164 and proceeds to step 1172.

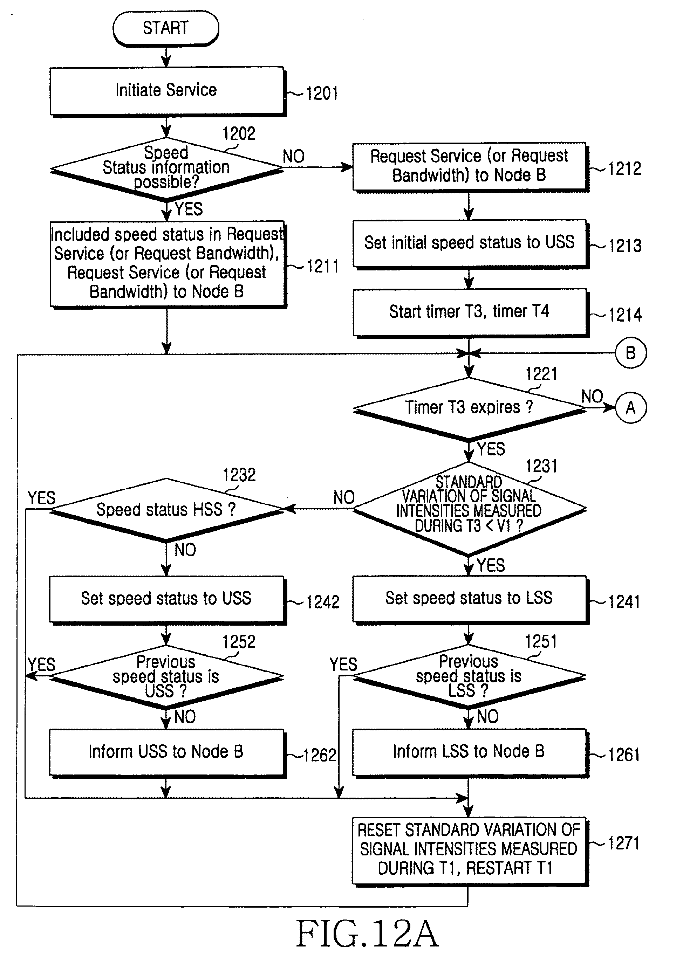

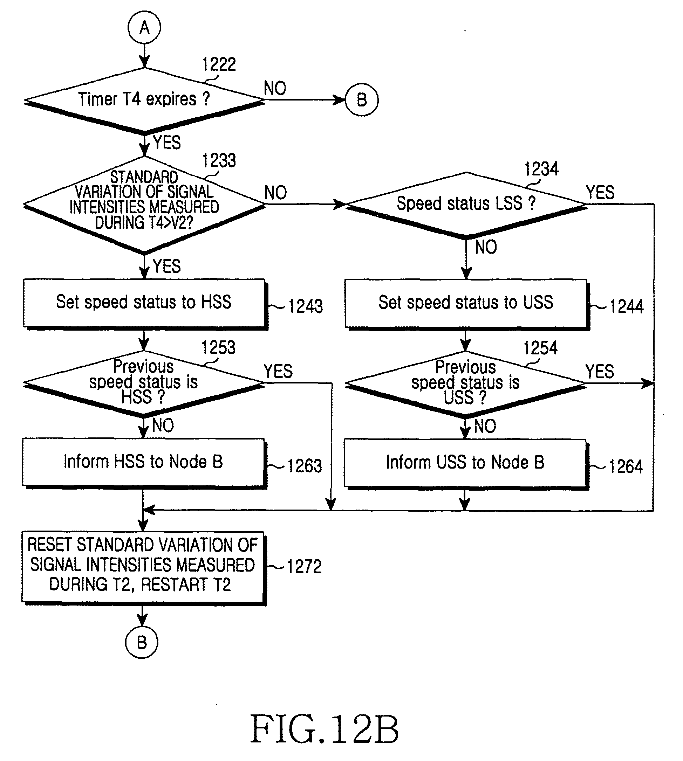

FIGs. 12A and 12B illustrates a flowchart of an operation of a UE for determining the speed status of the UE according to the second exemplary embodiment of the present invention.

Referring to FIG. 12A, the UE determines whether to request a service or resources/channels for the service in step 1201. Then, in step 1202, the UE determines if the UE currently possesses available speed status information. For example, the UE may be performing an operation for determination of the speed status because it is already receiving another service instead of the service that the UE wants to request or may keep on performing the operation to determine the speed status before requesting the service. If the UE currently possesses the speed status information, the UE proceeds to step 1211, in which the UE transmits a service (or resource/channel) request information message including the speed status information to the node B, and then proceeds to step 1221. If the UE determines in step 1202 that the UE currently does not possess available speed status information, the UE proceeds to step 1212 in which the UE transmits a service (or resource/channel) request information message including no speed status information to the node B, and then sets the initial speed status to the USS in step 1213.

To modify steps 1212 and 1213, the UE may first set the initial speed status to the USS, and may then transmit a service (or resource/channel) request information message comprising the initial speed status set to the USS to the node B. As described above, the UE sets the initial speed status to the USS if the UE currently possesses no available speed status information when the UE requests a service or resources/channels for the service.

After step 1213, the UE starts timers T3 and T4 provided by system information. The timers T3 and T4 and the signal intensity standard variations V 1 and V2 as described above are used in the exemplary embodiment of the present invention. When the time interval of the timer T3 expires in step 1221, the UE determines whether the standard variation of measured signal intensities for the pilot channel or N sub-bands periodically measured during the time interval of the timer T3 is smaller than V1 in step 1231. If the standard variation is smaller than V1, the UE sets the speed status to the LSS in step 1241. In step 1251, the UE determines whether the previous speed status is the LSS. If the previous speed status is not the LSS, the UE reports to the node B in step 1261 that the speed status of the UE has been changed to the LSS, and proceeds to step 1271. If the previous speed status is the LSS, the UE does not perform step 1261 and proceeds to step 1271. In step 1271, the UE initializes the standard variation measured during the time interval of the timer T3, restarts the timer T3, and returns to step 1221.

If a determination is made in step 1231 that the standard variation is not smaller than V1, the UE determines whether the current speed status is the HSS in step 1232. If the UE is not in the HSS, the UE sets the speed status to the USS in step 1242 and determines in step 1252 if the previous speed status is the USS. If the previous speed status is not the USS, the UE reports to the node B in step 1262 that the speed status of the UE has been changed to the USS, and then proceeds to step 1271. If it is determined in step 1252 that the previous speed status is the USS, the UE does not perform step 1262 and proceeds to step 1271.

In step 1221, if a determination is made that the time interval of the timer T3 has not expired, the UE determines in step 1222 of FIG. 12B if the time interval of the timer T4 has expired. If the time interval of the timer T4 has expired, the UE determines in step 1233 if the standard variation of measured signal intensities for the pilot channel or N AMC sub-bands periodically measured during the time interval of the timer T4 is larger than V2. If the standard variation is larger than V2, the UE sets the speed status to the HSS in step 1243. In step 1253, the UE determines whether the previous speed status is the HSS. If the previous speed status is not the HSS, the UE reports to the node B in step 1263 that the speed status has been changed to the HSS, and proceeds to step 1272. If the previous speed status is the HSS, the UE does not perform step 1263 and proceeds to step 1272. In step 1272, the UE initializes the standard variation measured during the time interval of the timer T4, restarts the timer T4, and returns to step 1221.

If a determination is made in step 1233 that the standard variation measured during the time interval of the timer T4 is not larger than V2, the UE determines in step 1234 if the current speed status is the LSS. If the UE is not in the LSS, the UE sets the speed status of the UE to the USS in step 1244, and determines in step 1254 if the previous speed status is the USS. If the previous speed status is not the USS, the UE reports to the node B in step 1264 that the speed status has been changed to the USS, and proceeds to step 1272. If it is determined in step 1254 that the previous speed status is the USS, the UE does not perform step 1264 and proceeds to step 1272.

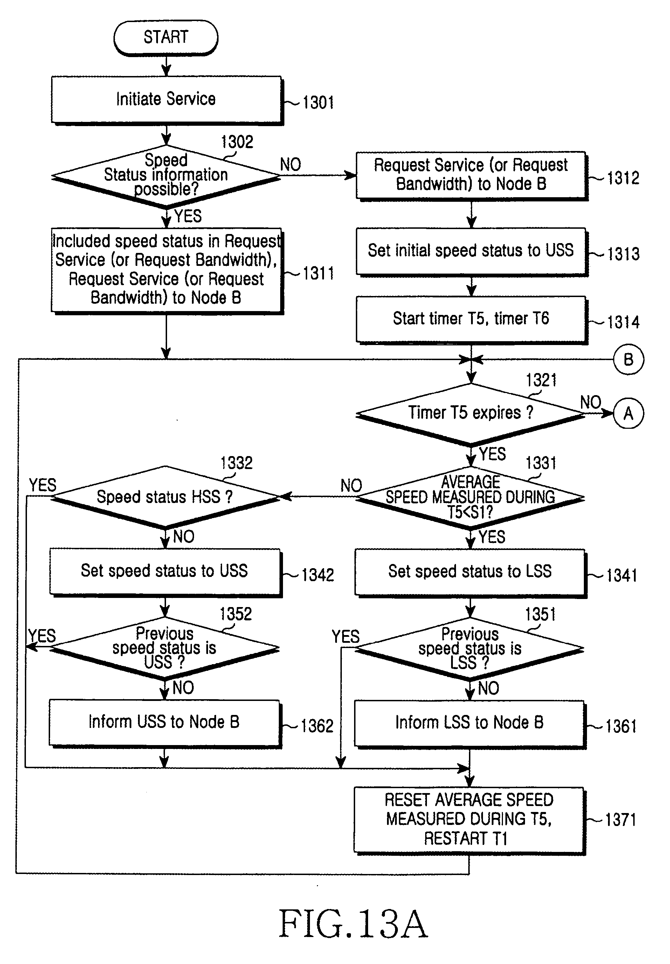

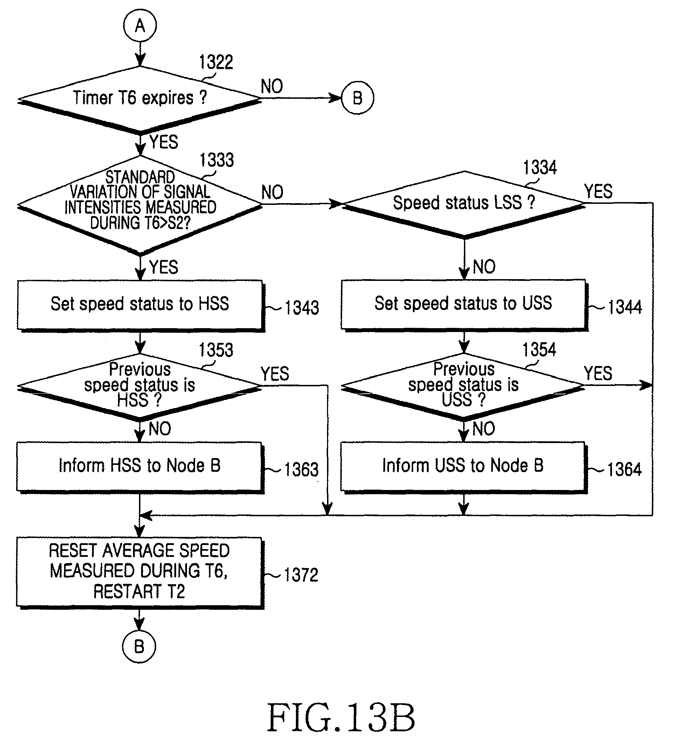

FIGs. 13A and 13B illustrate a flowchart of an operation of a UE for determining the speed status of the UE according to the third exemplary embodiment of the present invention.

Referring to FIG. 13A, the UE determines whether to request a service or resources/channels for the service in step 1301. Then, in step 1302, the UE determines if the UE currently possesses available speed status information. For example, the UE may be performing an operation to determine the speed status because it is already receiving another service instead of the service that the UE wants to request or may keep on performing the operation to determine the speed status before requesting the service. If the UE currently possesses the speed status information, the UE proceeds to step 1311 in which the UE transmits a service (or resource/channel) request information message including the speed status information to the node B, and then proceeds to step 1321. In contrast, if the UE determines in step 1302 that the UE currently does not possess available speed status information, the UE proceeds to step 1312 in which the UE transmits a service (or resource/channel) request information message including no speed status information to the node B, and then sets the initial speed status to the USS in step 1313.

To modify the steps 1312 and 1313, the UE may first set the initial speed status to the USS, and may then transmit to the node B a service (or resource/channel) request information message comprising the initial speed status set to the USS. As described above, the UE sets the initial speed status to the USS if the UE currently possesses no available speed status information when the UE requests a service or resources/channels for the service.

After step 1313, the UE starts timers T5 and T6 provided by system information. The timers T5 and T6 and the numerical average speeds S 1 and S2 as described above are used in the exemplary embodiment of the present invention. When the time interval of the timer T5 expires in step 1321, the UE verifies in step 1331 that the numerical average speed measured during the time interval of the timer T5 is smaller than S1. If the average speed is smaller than S1, the UE sets the speed status to the LSS in step 1341. In step 1351, the UE determines whether the previous speed status is the LSS. If the previous speed status is not the LSS, the UE reports to the node B in step 1361 that the speed status of the UE has been changed to the LSS, and proceeds to step 1371. If the previous speed status is the LSS, the UE does not perform step 1361 and proceeds to step 1371. In step 1371, the UE initializes the average speed measured during the time interval of the timer T5, restarts the timer T5, and returns to step 1321.

Meanwhile, if it is determined in step 1331 that the average speed is not smaller than S1, the UE determines in step 1332 if the current speed status is the HSS. If the UE is not in the HSS, the UE sets the speed status to the USS in step 1342 and determines in step 1352 if the previous speed status is the USS. If the previous speed status is not the USS, the UE reports to the node B in step 1362 that the speed status of the UE has been changed to the USS, and then proceeds to step 1371. If it is determined in step 1352 that the previous speed status is the USS, the UE does not perform step 1362 and proceeds to step 1371.

Meanwhile, if a determination is made in step 1321 that the time interval of the timer T5 has not expired, the UE determines in step 1322 of FIG. 13B if the time interval of the timer T6 has expired. If the time interval of the timer T6 has expired, the UE determines in step 1333 if the average speed measured during the time interval of the timer T6 is larger than S2. If the average speed is larger than S2, the UE sets the speed status to the HSS in step 1343. In step 1353, the UE determines if the previous speed status is the HSS. If the previous speed status is not the HSS, the UE reports to the node B in step 1363 that the speed status has been changed to the HSS, and proceeds to step 1372. If the previous speed status is the HSS, the UE does not perform step 1363 and proceeds to step 1372. In step 1372, the UE initializes the average speed measured during the time interval of the timer T6, restarts the timer T6, and then returns to step 1321.

If a determination is made in step 1333 that the average speed measured during the time interval of the timer T6 is not larger than S2, the UE determines in step 1334 if the current speed status is the LSS. If the UE is not in the LSS, the UE sets the speed status of the UE to the USS in step 1344, and determines in step 1354 if the previous speed status is the USS. If the previous speed status is not the USS, the UE reports to the node B in step 1364 that the speed status has been changed to the USS, and proceeds to step 1372. If it is determined in step 1354 that the previous speed status is the USS, the UE does not perform step 1364 and proceeds to step 1372.

Exemplary embodiments of the present invention have been described above in relation to an example of the orthogonal frequency division multiple access system. However, the present invention may also be applied to the use of multiple center carrier frequencies, that is, the multi-carrier DS-CDMA scheme.

According to an exemplary embodiment of the present invention as described above, a transmission mode of channel quality information is selected based on three speed status levels of a UE or is not performed, so that the uplink or downlink load may be minimized and the system capability may be maximized. Further, when the UE moves, information necessary to determine the transmission mode of the channel quality information is transmitted to a node B controlling a target cell, so that the present invention can minimize the uplink or downlink load and can maximize the system capability.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for receiving channel quality information of a User Equipment (UE) in a wireless communication system which divides an entire frequency band into multiple sub-bands and uses each of the multiple sub-bands in communication, the method comprising:
determining a speed status of the UE;
determining based on a determined speed status whether to receive the channel quality information of the UE;
reporting a channel quality information transmission mode, which indicates a type of the channel quality information, to the UE when a determination is made to receive the channel quality information of the UE;
receiving the channel quality information from the UE according to the channel quality information transmission mode; and
allocating radio resources to the UE in consideration of the received channel quality information.

2. The method as claimed in claim 1, wherein the determining based on a determined speed status comprises:
determining that at least one of an average channel quality value of the sub-bands and channel quality information of each sub-band should be used as the channel quality information of the UE, when the speed status of the UE comprises a Low Speed Status (LSS);
determining that the channel quality information of the UE should not be reported, when the speed status of the UE comprises a High Speed Status (HSS); and
determining that the average channel quality value of all of the sub-bands should be used as the channel quality information of the UE, when the speed status of the UE comprises an Unknown Speed Status (USS) which does not comprise the HSS and the LSS.

3. The method as claimed in claim 2, wherein, in the determining based on a determined speed status, a determination is made as to whether speed status information indicating the speed status of the UE has been received from the UE, and a determination is made that the speed status of the UE comprises the USS when the speed status information has not been received.

4. The method as claimed in claim 2, wherein, in the reporting of a channel quality information transmission mode, when the speed status of the UE comprises the USS, resources necessary to transmit the average channel quality value for all of the sub-bands are allocated to the UE, and allocation of the resources are then reported to the UE.

5. The method as claimed in claim 2, wherein, in the reporting of a channel quality information transmission mode, when the speed status of the UE comprises the LSS, resources necessary to transmit at least one of the average channel quality value of the sub-bands and the channel quality information of each sub-band are allocated to the UE, and allocation of the resources are then reported to the UE.

6. The method as claimed in claim 2, wherein, when the speed status of the UE comprises the HSS, a determination is made that the channel quality information should not be received.

7. The method as claimed in claim 1, further comprising inserting parameters, which are necessary to determine the speed status of the UE, into system information and then transmitting the parameters to the UE by the system information.

8. The method as claimed in claim 7, wherein the parameters comprise a first timer value, a first passed cell number which corresponds to the first timer value and serves as a boundary value for determining the LSS, a second timer value, and a second passed cell number which corresponds to the second timer value and serves as a boundary value for determining the HSS, wherein the second passed cell number comprises a number larger than the first passed cell number.

9. The method as claimed in claim 7, wherein the parameters comprise a first timer value, a first standard variation of measured signal intensities of at least the sub-bands and downlink pilot channels, a second timer value, and a second standard variation of measured signal intensities of at least the sub-bands and downlink pilot channels, wherein the first standard variation corresponds to the first timer value and serves as a boundary value for determining the LSS, the second standard variation corresponds to the second timer value and serves as a boundary value for determining the HSS, and the second standard variation is larger than the first standard variation.

10. The method as claimed in claim 7, wherein the parameters comprise a first timer value, a first average speed which corresponds to the first timer value and serves as a boundary value for determining the LSS, a second timer value, and a second average speed which corresponds to the second timer value and serves as a boundary value for determining the HSS, wherein the second average speed is faster than the first average speed.

11. The method as claimed in claim 7, further comprising reporting the speed status of the UE to a target node B when the UE has performed handoff to the target cell controlled by the target node B.

12. A method for transmitting channel quality information of a UE in a wireless communication system which divides an entire frequency band into multiple sub-bands and uses each of the multiple sub-bands in communication, the method comprising:
determining a speed status of the UE;
reporting the determined speed status to a node B when the determined speed status is different from a previous speed status before determining a speed status of the UE;
receiving information from the node B, which indicates a channel quality information transmission mode according to the determined speed state; and
transmitting at least one of an average channel quality value of the sub-bands and channel quality information of each of the sub-bands to the node B.

13. The method as claimed in claim 12, wherein the information indicating the channel quality information transmission mode comprises allocation information which indicates resources necessary to transmit the average channel quality value of the sub-bands, and allocation information which indicates resources necessary to transmit the channel quality information of each of the sub-bands.

14. The method as claimed in claim 12, wherein transmitting at least one of an average channel quality value of the sub-bands and channel quality information of each of the sub-bands to the node B comprises:
transmitting the average channel quality value of the sub-bands and the channel quality information of each sub-band as the channel quality information of the UE, when the speed status of the UE comprises a Low Speed Status (LSS);
determining that the channel quality information of the UE should not be reported, when the speed status of the UE comprises a High Speed Status (HSS);
transmitting the average channel quality value of all of the sub-bands as the channel quality information of the UE, when the speed status of the UE comprises an Unknown Speed Status (USS) which does not comprise the HSS and the LSS.

15. The method as claimed in claim 12, further comprising receiving parameters, which are necessary to determine the speed status of the UE, from the node B by system information.

16. The method as claimed in claim 12, wherein, in determining a speed status of the UE, the speed status of the UE is determined to be the LSS when the number of cells through which the UE has passed during a first timer interval appointed by the node B is smaller than a first passed cell number appointed by the node B, is determined to be the HSS when the number of cells through which the UE has passed during a second timer interval appointed by the node B is larger than a second passed cell number appointed by the node B, and is determined to be the USS in the other case, wherein the second passed cell number is larger than the first passed cell number.

17. The method as claimed in claim 12, wherein, in determining a speed status of the UE, the speed status of the UE is determined to be the LSS when a standard variation of signal intensities for at least all of the sub-bands and downlink pilot channels measured during a first timer interval appointed by the node B is smaller than a first standard variation appointed by the node B, is determined to be the HSS when the standard variation of signal intensities for at least all of the sub-bands and downlink pilot channels measured during a second timer interval appointed by the node B is larger than a second standard variation appointed by the node B, and is determined to be the USS in the other case, wherein the second standard variation is larger than the first standard variation.

18. The method as claimed in claim 12, wherein, in determining a speed status of the UE, the speed status of the UE is determined to be the LSS when an average speed of the UE measured during a first timer interval appointed by the node B is smaller than a first average speed appointed by the node B, is determined to be the HSS when the average speed of the UE measured during a second timer interval appointed by the node B is larger than a second average speed appointed by the node B, and is determined to be the USS in the other case, wherein the second average speed is larger than the first average speed.

19. An apparatus for transmitting and receiving channel quality information of a User Equipment (UE) in a wireless communication system which divides a frequency band into multiple sub-bands and uses each of the multiple sub-bands in communication, the apparatus comprising:
a UE for determining a speed status of the UE, and for transmitting the determined speed status to a node B when the determined speed status is different from a previous speed status; and
a node B for determining based on the determined speed status whether to receive the channel quality information of the UE, reporting a channel quality information transmission mode, which indicates a type of the channel quality information, to the UE when it is determined to receive the channel quality information of the UE, receiving the channel quality information from the UE according to the channel quality information transmission mode,
wherein the received channel quality information is used in order to allocate radio resources to the UE.

20. The apparatus as claimed in claim 19, wherein the node B determines that at least one of an average channel quality value of the sub-bands and channel quality information of each sub-band should be used as the channel quality information of the UE, when the speed status of the UE is a Low Speed Status (LSS); determines that the channel quality information of the UE should not be reported, when the speed status of the UE is a High Speed Status (HSS); and determines that the average channel quality value of all of the sub-bands should be used as the channel quality information of the UE, when the speed status of the UE is an Unknown Speed Status (USS) which does not comprise the HSS and the LSS.

21. The apparatus as claimed in claim 20, wherein the node B determines whether speed status information indicating the speed status of the UE has been received from the UE, and then determines that the speed status of the UE comprises the USS when the speed status information has not been received.

22. The apparatus as claimed in claim 19, wherein the node B inserts parameters, which are necessary to determine the speed status of the UE, into system information and then transmits the parameters to the UE by the system information.

23. The apparatus as claimed in claim 22, wherein the parameters comprise a first timer value, a first passed cell number which corresponds to the first timer value and serves as a boundary value for determining the LSS, a second timer value, and a second passed cell number which corresponds to the second timer value and serves as a boundary value for determining the HSS, wherein the second passed cell number is larger than the first passed cell number.

24. The apparatus as claimed in claim 22, wherein the parameters comprise a first timer value, a first standard variation of measured signal intensities of at least the sub-bands and downlink pilot channels, a second timer value, and a second standard variation of measured signal intensities of at least the sub-bands and downlink pilot channels, wherein the first standard variation corresponds to the first timer value and serves as a boundary value for determining the LSS, the second standard variation corresponds to the second timer value and serves as a boundary value for determining the HSS, and the second standard variation is larger than the first standard variation.

25. The apparatus as claimed in claim 22, wherein the parameters comprise a first timer value, a first average speed which corresponds to the first timer value and serves as a boundary value for determining the LSS, a second timer value, and a second average speed which corresponds to the second timer value and serves as a boundary value for determining the HSS, wherein the second average speed is faster than the first average speed.

26. The apparatus as claimed in claim 19, wherein the information indicating the channel quality information transmission mode comprises allocation information which indicates resources necessary to transmit the average channel quality value of the sub-bands, and allocation information which indicates resources necessary to transmit the channel quality information of each of the sub-bands.

27. The apparatus as claimed in claim 19, wherein the UE determines the speed status of the UE to be the LSS when the number of cells through which the UE has passed during a first timer interval appointed by the node B is smaller than a first passed cell number appointed by the node B; determines the speed status of the UE be the HSS when the number of cells through which the UE has passed during a second timer interval appointed by the node B is larger than a second passed cell number appointed by the node B; and determines the speed status of the UE to be the USS in the other case, wherein the second passed cell number is larger than the first passed cell number.

28. The apparatus as claimed in claim 19, wherein the UE determines the speed status of the UE to be the LSS when a standard variation of signal intensities for at least all of the sub-bands and downlink pilot channels measured during a first timer interval appointed by the node B is smaller than a first standard variation appointed by the node B; determines the speed status of the UE to be the HSS when the standard variation of signal intensities for at least all of the sub-bands and downlink pilot channels measured during a second timer interval appointed by the node B is larger than a second standard variation appointed by the node B; and determines the speed status of the UE to be the USS in the other case, wherein the second standard variation is larger than the first standard variation.

29. The apparatus as claimed in claim 19, wherein the UE determines the speed status of the UE to be the LSS when an average speed of the UE measured during a first timer interval appointed by the node B is smaller than a first average speed appointed by the node B; determines the speed status of the UE to be the HSS when the average speed of the UE measured during a second timer interval appointed by the node B is larger than a second average speed appointed by the node B; and determines the speed status of the UE to be the USS in the other case, wherein the second average speed is larger than the first average speed.

30. The apparatus as claimed in claim 19, wherein the node B reports the speed status of the UE to a target node B when the UE has performed handoff to the target cell controlled by the target node B.

31. An apparatus for transmitting and receiving channel quality information of a User Equipment (UE) in a wireless communication system comprising:
a control unit for determining a channel quality information transmission and for generating and outputting a corresponding message;
a database for storing information necessary to determine a channel quality information transmission mode;
an upper layer interface for receiving signals;
a data processor for outputting data received from the upper layer interface to a multiplexer under the control of the control unit;
wherein the multiplexer multiplexes received data from the data processor and the control unit and outputs the multiplexed data; and
a Radio Frequency (RF) unit for processing data into a transmission format and for up-converting the processed data into a signal of an RF band.

32. The apparatus of claim 31, wherein the control unit acquires load information of uplink and downlink from at least one of an RF unit and a data processor to receive a channel quality information transmission mode.
